(19) Europäisches Patentamt
European Patent Office
Office européen des brevets

(11) **EP 4 672 752 A1**

(12) **EUROPEAN PATENT APPLICATION**
published in accordance with Art. 153(4) EPC

(43) Date of publication:
**31.12.2025 Bulletin 2026/01**

(21) Application number: **23923429.7**

(22) Date of filing: **24.02.2023**

(51) International Patent Classification (IPC):
**H04N 19/593** (2014.01)    **H04N 19/80** (2014.01)

(52) Cooperative Patent Classification (CPC):
**H04N 19/593; H04N 19/80**

(86) International application number:
**PCT/CN2023/078238**

(87) International publication number:
**WO 2024/174253 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **XU, Luhang**
**Dongguan, Guangdong 523860 (CN)**

(74) Representative: **RGTH**
**Patentanwälte PartGmbB**
**Neuer Wall 10**
**20354 Hamburg (DE)**

(54) **INTRA PREDICTION METHOD AND APPARATUS BASED ON INTERPOLATION FILTERING, VIDEO ENCODING METHOD AND APPARATUS, VIDEO DECODING METHOD AND APPARATUS, AND SYSTEM**

(57)    An intra frame prediction method and apparatus based on interpolation filtering, a video encoding method and apparatus, a video decoding method and apparatus, and a system. The intra prediction method based on interpolation filtering comprises: during the intra prediction process of video encoding and decoding, determining, according to a filtering window of the current block and reconstruction values of pixel points in a reconstruction region adjacent to the current block, a filtering coefficient which is used when interpolation filtering is performed on the current block; and performing point-by-point prediction on the pixel points in the current block according to the filtering window and the filtering coefficient, so as to obtain a predicted block of the current block. In the embodiments of the present disclosure, a predicted block of the current block is obtained using the current block and the spatial redundancy of a reconstruction region adjacent thereto, such that the encoding performance can be improved.

Determine, based on a filtering window of a current block and a reconstructed value of a pixel in a reconstruction area neighboring to the current block, a filtering coefficient used to perform interpolation filtering on the current block — S110

Perform pixel-by-pixel prediction on pixels in the current block according to the filtering window and the filtering coefficient, to obtain a predicted block of the current block — S120

FIG. 3

**Description**

**TECHNICAL** FIELD

Embodiments of the present disclosure relate to but are not limited to video technologies, and more specifically, to an intra prediction method and apparatus based on interpolation filtering, a video encoding method and apparatus, a video decoding method and apparatus, and a system.

BACKGROUND

Digital video compression technologies primarily compress huge amounts of digital picture and video data, to facilitate transmission and storage. In current common video encoding and decoding standards, for example, H.266/versatile video coding (versatile video coding, VVC), a block-based hybrid encoding framework is used. Each frame in a video is partitioned into square largest coding units (LCU: largest coding unit) of a same size (for example, 128×128 or 64×64). Each largest coding unit may be partitioned into rectangular coding units (CU: coding unit) according to a rule. A coding unit may be further partitioned into a prediction unit (PU: prediction unit), a transform unit (TU: transform unit), and the like. The hybrid encoding framework includes a prediction (prediction) module, a transform (transform) module, a quantization (quantization) module, an entropy coding (entropy coding) module, an in-loop filtering (in loop filter) module, and the like. The prediction module includes intra prediction (intra prediction) and inter prediction (inter prediction) that are used to reduce or eliminate redundancies within a video. An intra block is predicted by using pixels around the block as a reference, while an inter block is predicted by using information about a spatially adjacent block and reference information from other frames. Residual information, relative to a prediction signal, is transformed, quantized, and entropy encoded in blocks, to generate a bitstream. These technologies are described in standards and implemented in various fields related to video compression.

With the explosive growth of internet videos and the demands of people for higher video resolution, existing digital video compression standards can save significant amounts of bandwidth. However, currently there is still a need to develop more advanced digital video compression technologies, to alleviate bandwidth and traffic pressure during digital video transmission.

**SUMMARY**

The following is a summary of subjects detailed herein. The summary is not intended to limit the protection scope of the claims.

An embodiment of the present disclosure provides an intra prediction method based on interpolation filtering, including:

determining, based on a filtering window of a current block and a reconstructed value of a pixel in a reconstruction area neighboring to the current block, a filtering coefficient used to perform interpolation filtering on the current block; and performing pixel-by-pixel prediction on pixels in the current block according to the filtering window and the filtering coefficient, to obtain a predicted block of the current block, where when performing prediction on a current pixel, reference pixels neighboring to the current pixel are determined based on the filtering window, and interpolation filtering is performed based on pixel values of the reference pixels and the filtering coefficient, to obtain a predicted value of the current pixel.

An embodiment of the present disclosure further provides a video decoding method, including:

decoding an interpolation filtering mode flag of a current block; in a case in which it is determined, based on the decoded interpolation filtering mode flag, to perform intra prediction on the current block by using an interpolation filtering mode, determining a filtering window selected for the current block and a reconstruction area selected for the current block; and performing intra prediction on the current block based on the determined filtering window and the determined reconstruction area by using the intra prediction method based on interpolation filtering according to any one of embodiments of the present disclosure.

An embodiment of the present disclosure further provides a video encoding method, including:

performing intra prediction on a current block based on a plurality of intra prediction modes, where if determining that an interpolation filtering mode is allowed to be used for the current block, intra prediction in the interpolation filtering mode is performed on the current block by using the intra prediction method according to any one of embodiments of the present disclosure; and

if determining, based on rate distortion costs of the plurality of intra prediction modes, to perform intra prediction on the current block by using the interpolation filtering mode, encoding an interpolation filtering mode flag of the current block, to indicate performing intra prediction on the current block by using the interpolation filtering mode.

An embodiment of the present disclosure further provides a bitstream, where the bitstream is generated according to the video encoding method according to any one of embodiments of the present disclosure.

An embodiment of the present disclosure further provides an intra prediction apparatus based on interpolation filtering, including a processor and a memory that stores a computer program, where when executing the computer program, the processor is capable of implementing the intra prediction method based on interpolation filtering according to any one of embodiments of the present disclosure.

An embodiment of the present disclosure further provides a video decoding apparatus, including a processor and a memory that stores a computer program, where when executing the computer program, the processor is capable of implementing the video decoding method according to any one of embodiments of the present disclosure.

An embodiment of the present disclosure further provides a video encoding apparatus, including a processor and a memory that stores a computer program, where when executing the computer program, the processor is capable of implementing the video encoding method according to any one of embodiments of the present disclosure.

An embodiment of the present disclosure further provides a video encoding and decoding system, including the video encoding apparatus according to any one of embodiments of the present disclosure and the video decoding apparatus according to any one of embodiments of the present disclosure.

An embodiment of the present disclosure further provides a non-transitory computer-readable storage medium. The computer-readable storage medium stores a computer program, where when being executed by a processor, the computer program implements the intra prediction method based on interpolation filtering according to any one of embodiments of the present disclosure, or the video decoding method according to any one of embodiments of the present disclosure, or the video encoding method according to any one of embodiments of the present disclosure.

An embodiment of the present disclosure further provides a computer program product, including a computer program, where when being executed by a processor, the computer program is capable of implementing the intra prediction method based on interpolation filtering according to any one of embodiments of the present disclosure, the video decoding method according to any one of embodiments of the present disclosure, or the video encoding method according to any one of embodiments of the present disclosure.

## BRIEF DESCRIPTION OF DRAWINGS

The drawings are used to provide an understanding of embodiments of the present disclosure and form a part of the specification, and explain technical solutions of the present disclosure together with embodiments of the present disclosure, but do not constitute a limitation on the technical solutions of the present disclosure.

FIG. 1A is a schematic diagram of an encoding and decoding system according to an embodiment of the present disclosure.

FIG. 1B is a block diagram of an encoding end according to an embodiment of the present disclosure.

FIG. 1C is a block diagram of a decoding end according to an embodiment of the present disclosure.

FIG. 2 is a schematic diagram of an intra prediction mode according to an embodiment of the present disclosure.

FIG. 3 is a flowchart of an intra prediction method based on interpolation filtering according to an embodiment of the present disclosure.

FIG. 4A is a schematic diagram of a filtering window used in an embodiment of the present disclosure.

FIG. 4B is a schematic diagram of an interpolation filter used in an embodiment of the present disclosure.

FIG. 5A, FIG. 5B, and FIG. 5C are respectively schematic diagrams of position relationships between a filtering window, a current block, and a reconstruction area when a current pixel is located in three different positions of the current block according to an embodiment of the present disclosure.

FIG. 6A, FIG. 6B, and FIG. 6C are respectively schematic diagrams of three different spatial position relationships between reference pixels and a current pixel according to an embodiment of the present disclosure.

FIG. 7A, FIG. 7B, and FIG. 7C are respectively schematic diagrams of filtering windows in three different shapes that correspond to FIG. 6A, FIG. 6B, and FIG. 6C according to an embodiment of the present disclosure.

FIG. 8A, FIG. 8B, and FIG. 8C are respectively schematic diagrams of cases in which a reconstruction area neighboring to a current block is an upper reconstruction area, a left reconstruction area, or an L-shaped reconstruction area according to an embodiment of the present disclosure.

FIG. 9A and FIG. 9B are respectively schematic diagrams of sample positions selected according to different steps to construct a Wiener-Hopf equation according to an embodiment of the present disclosure.

FIG. 10 is a schematic diagram of a part of a reconstruction area used to obtain a mean value when an L-shaped reconstruction area is used according to an embodiment of the present disclosure.

FIG. 11 is a flowchart of a video encoding method according to an embodiment of the present disclosure.

FIG. 12 is a flowchart of a video decoding method according to an embodiment of the present disclosure.

FIG. 13A to FIG. 13F are respectively schematic diagrams of six different reconstruction areas used in an embodiment of the present disclosure.

FIG. 14A and FIG. 14B are respectively schematic diagrams of two different manners of performing ternary partitioning on a current block according to an embodiment of the present disclosure.

FIG. 15 is a schematic structural diagram of an intra prediction apparatus based on interpolation filtering according to an embodiment of the present disclosure.

FIG. 16A to FIG. 16F are schematic diagrams of six different scanning manners for performing pixel-by-pixel prediction according to an embodiment of the present disclosure.

## DESCRIPTION OF EMBODIMENTS

The present disclosure provides descriptions of a plurality of embodiments, but the descriptions are illustrative, rather than restrictive. In addition, it is evident for those of ordinary skill in the art that there may be more embodiments and implementations within the scope of embodiments described in the present disclosure.

In the descriptions of the present disclosure, terms such as "exemplary" or "for example" are used to represent an example, an instance, or an illustration. Any embodiment described as "exemplary" or "for example" in the present disclosure should not be construed as being more preferred or advantageous than other embodiments. In this specification, the term "and/or" is a description of an association relationship between associated objects, and represents that there may be three relationships. For example, A and/or B may represent three cases: only A exists, both A and B exist, and only B exists. "A plurality of" means two or more than two. In addition, to clearly describe the technical solutions in embodiments of the present disclosure, terms, such as "first" and "second", are used to distinguish between same items or similar items that have essentially the same function and usage. Those skilled in the art may understand that the terms, such as "first" and "second", are not intended to limit a quantity or execution order; and the terms, such as "first" and "second", do not indicate a definite difference. In this specification, "includes any one or more of the following: option 1, option 2, ..." or "including any one or more of option 1, option 2, ..." means that any one of the listed options is included, or any combination of a plurality of options in the listed options is included. For example, "including any one or more of the following: A or B" or "including any one or more of A or B" means that only A is included, or only B is included, or A and B are included. For another example, "including any one or more of the following: A, B, or C" or "including any one or more of A, B, or C" means that only A is included, or only B is included, or only C is included, or A and B are included, or B and C are included, or A, B, and C are included. The rest may be deduced by analogy if there are more options.

When representative exemplary embodiments are described, methods and/or processes may be presented as specific sequences of steps in the specification. However, to an extent that the methods or processes are independent of the specific order of the steps described herein, the methods or processes should not be limited to the steps in the specific order. As those of ordinary skill in the art will understand that step sequences are also possible. Therefore, the specific order of the steps described in the specification should not be interpreted as a limitation on the claims. In addition, the claims for the methods and/or processes should not be limited to steps being executed in the described order. Those skilled in the art can easily understand that the order of the steps may vary while still remaining within the spirit and scope of embodiments of the present disclosure.

The intra prediction method based on interpolation filtering, the video encoding method, and the video decoding method according to embodiments of the present disclosure may be applied to various video encoding and decoding standards, such as H.264/advanced video coding (advanced video coding, AVC), H.265/high efficiency video coding (high efficiency video coding, HEVC), H.266/versatile video coding (versatile video coding, VVC), AVS (Audio Video coding Standard, audio video coding standard), and other standards formulated by the MPEG (Moving Picture Experts Group, moving picture experts group), AOM (alliance for open media, Alliance for Open Media), and JVET (joint video experts team, Joint Video Experts Team) and their extensions, or any other customized standards.

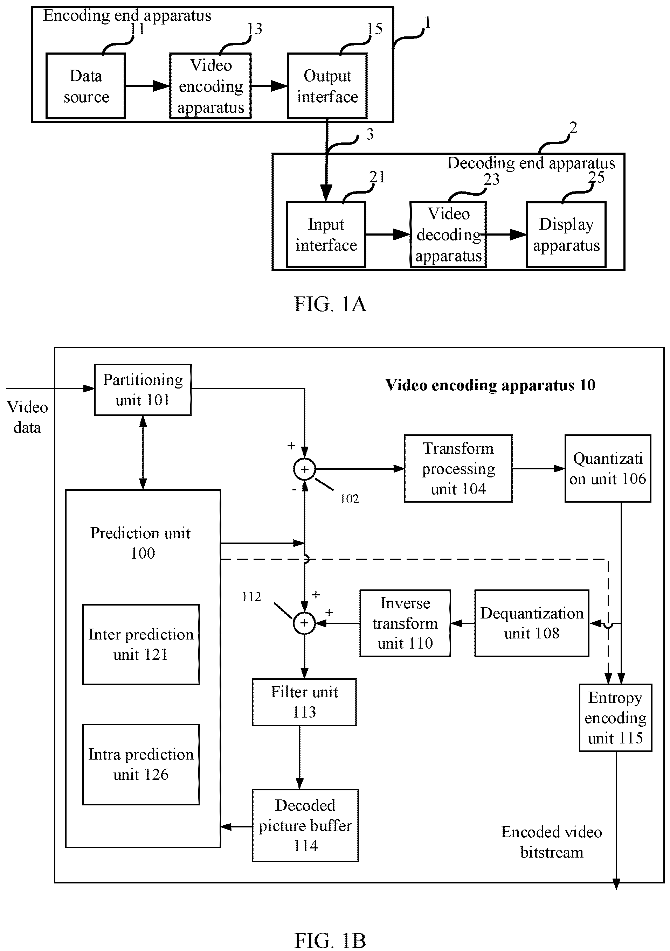

FIG. 1A is a block diagram of a video encoding and decoding system to which embodiments of the present disclosure are applicable. As shown in FIG. 1A, the system includes an encoding end 1 and a decoding end 2, where the encoding end 1 generates a bitstream, and the decoding end 2 decodes the bitstream. The decoding end 2 may receive the bitstream from the encoding end 1 over a link 3. The link 3 includes one or more media or apparatuses that can transmit the bitstream from the encoding end 1 to the decoding end 2. In an example, the link 3 includes one or more communications media that causes the encoding end 1 to directly transmit the bitstream to the decoding end 2. The encoding end 1 modulates the bitstream according to a communication standard, and transmits the modulated bitstream to the decoding end 2. The one or more communications media may include wireless and/or wired communications media, which may constitute a part of a packet network. In another example, the bitstream may alternatively be outputted from an output interface 15 to a storage apparatus. The decoding end 2 may read stored data from the storage apparatus through streaming or downloading.

As shown in FIG. 1A, the encoding end 1 includes a data source 11, a video encoding apparatus 13, and the output interface 15. The data source 11 includes a video capture apparatus (for example, a camera), an archive containing previously captured data, a feed interface configured to receive data from a content provider, a computer graphics system configured to generate data, or a combination of these sources. The video encoding apparatus 13 may also be referred to as a video encoder, and is configured to encode data from the data source 11 and output the encoded data to the output interface 15. The output interface 15 may include at least one of a regulator, a modem, or a transmitter. The decoding end 2 includes an input interface 21, a video decoding apparatus 23, and a display apparatus 25. The input interface 21 includes at least one of a receiver or a modem. The input interface 21 may receive the bitstream over the link 3 or from the storage apparatus. The video decoding apparatus 23 is also referred to as a video decoder, and is configured to decode the received bitstream. The display apparatus 25 is configured to display the decoded data. The display apparatus 25 may be integrated with or separated from another apparatus of the decoding end 2. The display apparatus 25 is optional for the decoding end. In another example, the decoding end may include another apparatus or device to which the decoded data is applied.

FIG. 1B is a block diagram of an exemplary video encoding apparatus to which embodiments of the present disclosure are applicable. As shown in FIG. 1B, the video encoding apparatus 10 includes the following units.

A partitioning unit 101 is configured to work with a prediction unit 100, to partition received video data into slices (Slice), coding tree units (CTU: Coding Tree Unit), or other larger units. The received video data may be a video sequence that includes video frames such as I-frames, P-frames, or B-frames.

The prediction unit 100 is configured to partition a CTU into coding units (CU: Coding Unit) and execute intra prediction encoding or inter prediction encoding on the CUs. When intra prediction and inter prediction is performed on a CU, the CU may be partitioned into one or more prediction units (PU: prediction unit).

The prediction unit 100 includes an inter prediction unit 121 and an intra prediction unit 126.

The inter prediction unit 121 is configured to execute inter prediction on a PU, to generate predicted data for the PU. The predicted data includes a predicted block for the PU, motion information of the PU, and various syntax elements. The inter prediction unit 121 may include a motion estimation (ME: motion estimation) unit and a motion compensation (MC: motion compensation) unit. The motion estimation unit may be configured to perform motion estimation, to generate a motion vector, and the motion compensation unit may be configured to obtain or generate a predicted block according to the motion vector.

The intra prediction unit 126 is configured to execute intra prediction on a PU, to generate predicted data for the PU. The predicted data for the PU may include a predicted block for the PU and various syntax elements.

A residual generation unit 102 (represented by a circle with a plus symbol inside behind the partitioning unit 101 in FIG. 1B) is configured to generate a residual block for a CU by subtracting, from an original block of the CU, the predicted block for the PU obtained by partitioning the CU.

A transform processing unit 104 is configured to partition the CU into one or more transform units (TU: Transform Unit). Partitioning of prediction units may be different from that of transform units. A residual block associated with a TU is a sub-block obtained by partitioning the residual block for the CU. A coefficient block associated with a TU is generated by applying one or more transforms to a residual block associated with the TU.

A quantization unit 106 is configured to quantize a coefficient in the coefficient block based on a quantizer parameter, and may change a degree of quantization of the coefficient block by adjusting the quantizer parameter (QP: Quantizer Parameter).

A dequantization unit 108 and an inverse transform unit 110 are respectively configured to apply dequantization and inverse transform to the coefficient block, to obtain a reconstructed residual block associated with the TU.

A reconstruction unit 112 (represented by a circle with a plus symbol inside behind the inverse transform processing unit 110 in FIG. 1B) is configured to add the reconstructed residual block and the predicted block generated by the prediction unit 100, to generate a reconstructed picture.

A filter unit 113 is configured to execute in-loop filtering on the reconstructed picture.

A decoded picture buffer 114 is configured to store the reconstructed picture obtained after the in-loop filtering. The intra prediction unit 126 may extract a reference picture of a block neighboring to the current block from the decoded picture buffer 114, to execute intra prediction. The inter prediction unit 121 may execute inter prediction on a PU of a picture of a current frame by using a reference picture of a previous frame buffered in the decoded picture buffer 114.

An entropy encoding unit 115 is configured to execute an entropy encoding operation on received data (such as a syntax element, a quantized coefficient block, and motion information), to generate a video bitstream.

In another example, the video encoding apparatus 10 may include more or fewer function components than those shown in this example or different function components from those shown in this example. For example, the transform processing unit 104 and the inverse transform processing unit 110 may not be included.

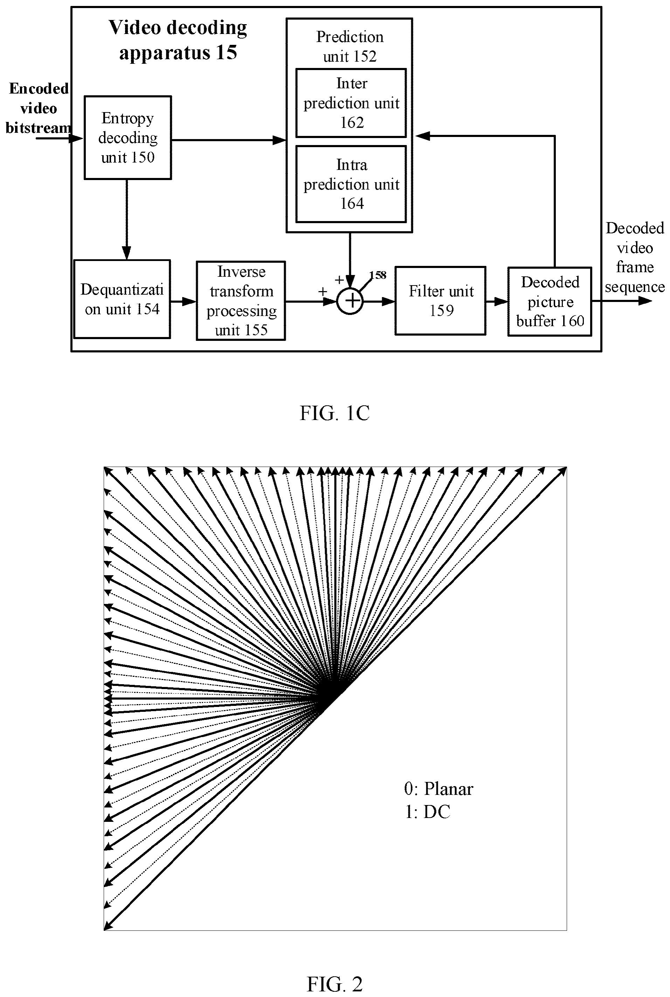

FIG. 1C is a block diagram of an exemplary video decoding apparatus to which embodiments of the present disclosure are applicable. As shown in FIG. 1C, the video decoding apparatus 15 includes the following units.

An entropy decoding unit 150 is configured to perform entropy decoding on a received encoded video bitstream, to extract a syntax element, a quantized coefficient block, motion information of a PU, and the like. A prediction unit 152, a dequantization unit 154, an inverse transform processing unit 156, a reconstruction unit 158, and a filter unit 159 may each execute corresponding operations based on the syntax element extracted from the bitstream.

The dequantization unit 154 is configured to perform dequantization on a quantized coefficient block associated with a TU.

The inverse transform processing unit 156 is configured to apply one or more inverse transforms to an inverse quantized coefficient block, to generate a reconstructed residual block for the TU.

The prediction unit 152 includes an inter prediction unit 162 and an intra prediction unit 164. If intra prediction encoding is used for a current block, the intra prediction unit 164 determines an intra prediction mode for the PU based on a syntax element decoded from the bitstream, and executes intra prediction based on reconstructed reference information of a block neighboring to the current block that is obtained from a decoded picture buffer 160. If inter prediction encoding is used for a current block, the inter prediction unit 162 determines a reference block of the current block based on motion information of the current block and a corresponding syntax element, and executes inter prediction on the reference block obtained from the decoded picture buffer 160.

The reconstruction unit 158 (represented by a circle with a plus symbol inside behind the inverse transform processing unit 155 in FIG. 1C) is configured to obtain a reconstructed picture based on the reconstructed residual block associated with the TU and the predicted block for the current block that is generated by the prediction unit 152 by executing intra prediction or inter prediction.

A filter unit 159 is configured to execute in-loop filtering on the reconstructed picture.

The decoded picture buffer 160 is configured to store the reconstructed picture obtained after the in-loop filtering as the reference picture for subsequent motion compensation, intra prediction, inter prediction, and the like, and may also output the reconstructed picture obtained after the filtering as decoded video data for display on a display apparatus.

In another embodiment, the video decoding apparatus 15 may include more, fewer, or different function components. For example, in some cases, the inverse transform processing unit 155 may not be included.

By using the video encoding apparatus and the video decoding apparatus described above, the following basic encoding and decoding processes may be executed. At the encoding end, a frame of picture is partitioned into blocks, intra prediction, inter prediction, or another algorithm is applied to a current block, to generate a predicted block for the current block, a residual block is obtained by subtracting the predicted block from an original block of the current block, the residual block is transformed and quantized to obtain a quantized coefficient, and the quantized coefficient is entropy encoded to generate a bitstream. At the decoding end, intra prediction or inter prediction is performed on the current block, to generate a predicted block for the current block, and then, the quantized coefficient obtained by decoding the bitstream is dequantized and inverse-transformed to obtain a residual block, the predicted block and the residual block are added to obtain a reconstructed block, reconstructed blocks form a reconstructed picture, and in-loop filtering is performed on the reconstructed picture based on pictures or blocks, to obtain a decoded picture. The encoding end performs similar operations as the decoding end, to obtain the decoded picture, which may also be referred to as the reconstructed picture obtained after the in-loop filtering. The reconstructed picture obtained after the in-loop filtering may be used as a reference frame for performing inter prediction on a subsequent frame. Block partitioning information, prediction, transform, quantization, entropy encoding, in-loop filtering, and other mode information, and parameter information that are determined at the encoding end may be written into the bitstream. The decoding end determines, by decoding the bitstream or analyzing specified information, the block partitioning information, prediction, transform, quantization, entropy encoding, in-loop filtering, and other mode information, and parameter information that are used by the encoding end, thereby ensuring that the decoded picture obtained at the encoding end is the same as the decoded picture obtained at the decoding end.

Although a block-based hybrid encoding framework is used as an example above, embodiments of the present disclosure are not limited thereto. With the development of technologies, one or more modules in the framework and one or more steps in the process may be replaced or optimized. Embodiments of the present disclosure relate to but are not limited to the foregoing intra prediction units in the encoding end and the decoding end and corresponding intra prediction methods.

In this specification, a current block (current block) may be a current coding unit (CU) in a current picture, or may be various block-level coding units, such as a coding tree unit (CTU), a current prediction unit (PU), a current PU, or a sub-block obtained by partitioning a current CU. In an intra prediction process, a current block may also be referred to as a to-be-predicted block or a current to-be-predicted block.

During intra prediction at the encoding end, generally a current block is predicted by using various angular modes and non-angular modes, to obtain a predicted block. Based on rate distortion information calculated according to the predicted block and an original block, an optimal intra prediction mode is selected for the current block, and information (for example, an index) about the intra prediction mode is encoded and transmitted to the decoding end via a bitstream. The intra prediction mode selected for the current block is determined by the decoding end through decoding, and intra prediction is performed on the current block in the intra prediction mode. After the development of successive generations of digital video encoding and decoding standards, non-angular modes remain relatively stable and include a mean value mode (that is, a DC mode), a planar mode (that is, a planar mode), and the like. A quantity of angular modes increases with the evolution of digital video encoding and decoding standards. The international digital video encoding standard H series is used as an example. An H.264/AVC standard has only eight conventional angular prediction modes and one conventional non-angular prediction mode, while H.265/HEVC is extended to 33 conventional angular prediction modes and two conventional non-angular prediction modes. FIG. 2 shows conventional intra prediction modes in H.266/VVC, including the planar mode, the DC mode, and 65 angular modes. The DC mode is applicable to a large flat area, and a predicted value of the area is obtained by calculating a mean value of reference pixels on the left of the area and/or reference pixels above the area. The planar mode is applicable to pixel gradient, that is, an area in which a pixel value changes slowly. Encoding performance achieved by the current intra prediction modes still needs to be improved.

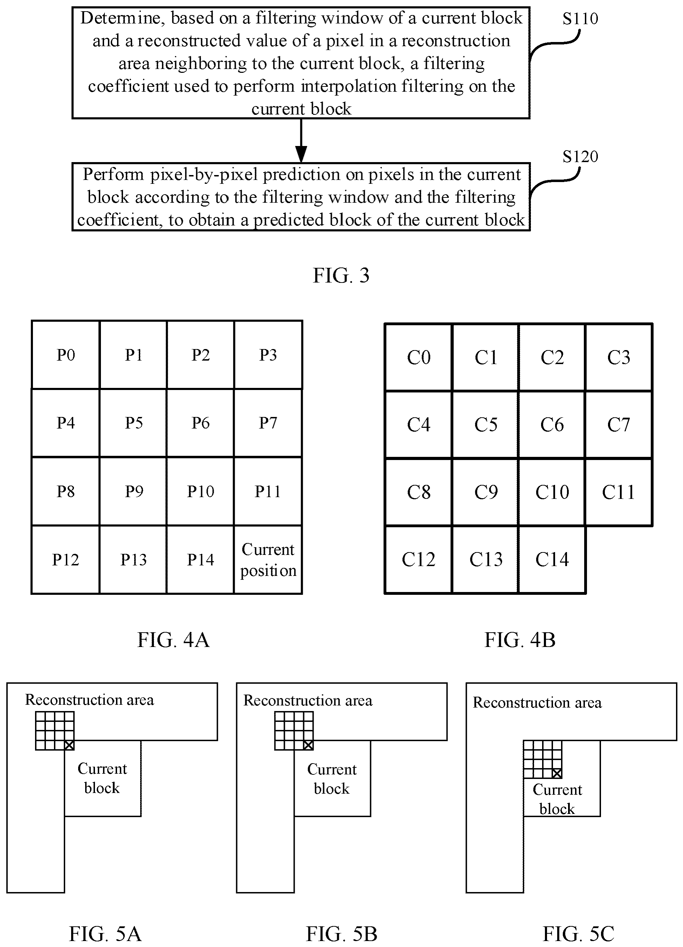

An embodiment of the present disclosure provides an intra prediction method based on interpolation filtering. As shown in FIG. 3, the method includes the following steps.

Step S110: Determine, based on a filtering window of a current block and a reconstructed value of a pixel in a reconstruction area neighboring to the current block, a filtering coefficient used to perform interpolation filtering on the current block.

Step S120: Perform pixel-by-pixel prediction on pixels in the current block according to the filtering window and the filtering coefficient, to obtain a predicted block of the current block.

When performing prediction on a current pixel, reference pixels neighboring to the current pixel are determined based on the filtering window, and interpolation filtering is performed based on pixel values of the reference pixels and the filtering coefficient, to obtain a predicted value of the current pixel.

In this embodiment of the present disclosure, by using spatial redundancy of a current block and a reconstruction area neighboring to the current block, an obtained filtering coefficient is applied pixel by pixel to the current block. Thus, a predicted value of a current pixel is obtained by perforing interpolation filtering according to a reconstructed value or a predicted value of an adjacent pixel, which is repeated until predicted values of all pixels of the current block are obtained. That is, a predicted block of the current block is obtained.

In this specification, the intra prediction method according to this embodiment of the present disclosure is referred to as intra prediction in an interpolation filtering mode, and is used as an optional intra prediction mode during video encoding and decoding, thereby improving encoding performance.

A filter used for interpolation filtering in this embodiment of the present disclosure is referred to as an interpolation filter (filter for short). A filtering window and a filtering coefficient used during interpolation filtering are referred to as a filtering window and a filtering coefficient used by the interpolation filter. A shape and a quantity of taps of the filtering window used by the interpolation filter are also referred to as a shape and a quantity of taps of the interpolation filter.

The filtering window may be in any shape and any dimension greater than three pixels. When the filtering window is relatively small, the filter has a small quantity of filtering coefficients (coefficients for short) and low prediction complexity, but a quantity of reference pixels used for prediction is small, and a prediction error may be relatively large. When the filtering window is relatively large, the filter has a large quantity of coefficients and high prediction complexity, and a prediction error may become smaller, but an excessively large filtering window may also cause overfitting. In the present disclosure, the shape and the dimension of the filtering window are not limited.

In an example, a 4×4 filtering window shown in FIG. 4A is used. The filtering window includes one current position and 15 neighboring positions, that is, P0 to P14. When the current position is aligned with a position of a to-be-predicted current pixel, 15 pixels on P0 to P14 are 15 reference pixels neighboring to the current pixel. When a predicted value of the current pixel is calculated in an interpolation filtering manner, pixel values of the 15 reference pixels need to be respectively multiplied by corresponding filtering coefficients, that is, C0 to C14. FIG. 4B shows a 15-tap interpolation filter. A group of filtering coefficients used by this filter includes 15 filtering coefficients that are in a one-to-one correspondence with 15 neighboring positions in the filtering window shown in FIG. 4A. The group of filtering coefficients is used when interpolation filtering is performed on each pixel in the current block.

In addition to a rectangular filtering window, a filtering window in another shape and with another quantity of neighboring positions may alternatively be used. In an exemplary embodiment of the present disclosure, the filtering window of the current block is determined based on a block parameter of the current block, where the block parameter includes at least one of a shape, a dimension, or a position, and the dimension is, for example, a width or a height. For example, a 4×4 filtering window is used for an 8×8 current block, and a 5×5 filtering window is used for a 16×16 current block.

In an exemplary embodiment of the present disclosure, for the current block, filters that use a plurality of quantities of taps are allowed to be used for prediction, to obtain different predicted values. Then, an optimal filter is selected from the filters to participate in rate distortion optimization, to obtain better encoding performance.

When performing pixel-by-pixel prediction on the current block, since to-be-predicted current pixels are located at different positions of the current block, reference pixels neighboring to the current pixels may be pixels in a reconstruction area, or may be pixels in the current block. As shown in FIG. 5A, when the to-be-predicted current pixel is located in an upper-left corner of the current block, after the current pixel is aligned with a current position of the filtering window, the reference pixels neighboring to the current pixels are all reconstructed pixels in the reconstruction area. As shown in the example shown in FIG. 5B, when the to-be-predicted current pixel is located in a position in a first row of the current block except the upper-left corner (in the first row and a second column in FIG. 5B), after the current pixel is aligned with a current position of the filtering window, the reference pixels neighboring to the current pixels include not only reconstructed pixels in the reconstruction area, but also a predicted pixel in the current block (for example, the pixel in the upper-left corner of the current block), and it may be ensured, by a pixel-by-pixel prediction sequence, that the reference pixels are already predicted at this time. As shown in the example in FIG. 5C, when the to-be-predicted current pixel is located in a fourth row and a fourth column inside the current block, after the current pixel is aligned with a current position of the $4\times4$ filtering window, the reference pixels neighboring to the current pixel are all predicted pixels in the current block.

In an exemplary embodiment of the present disclosure, the reference pixels include at least one of the following: a reconstructed pixel in the reconstruction area neighboring to the current block, or a predicted pixel in the current block; and

> in a case in which the reference pixels are all reconstructed pixels, the pixel values of the reference pixels refer to reconstructed values of the reference pixels; or
> in a case in which the reference pixels are all predicted pixels, the pixel values of the reference pixels refer to predicted values of the reference pixels; or
> in a case in which the reference pixels include a reconstructed pixel and a predicted pixel, the pixel values of the reference pixels include a reconstructed value of the reconstructed pixel in the reference pixels and a predicted value of the predicted pixel in the reference pixels.

In this embodiment, reconstructed values of reconstructed pixels and/or predicted values of predicted pixels are used as inputs of an interpolation filter, to calculate predicted values of current pixels. To ensure that reference pixels in a current block have predicted values, prediction based on interpolation filtering needs to be performed pixel by pixel in a specific sequence.

Different filtering windows (at least one of shape or dimension is different) may be set for different current blocks. For a same current block, a plurality of different filtering windows may be set. A larger filtering window indicates a larger quantity of neighboring positions in the filtering window, a larger quantity of corresponding filtering coefficients, and more adjacent spatial information that may be referred to for interpolation. Filters in different shapes may obtain adjacent spatial information from different directions for interpolation.

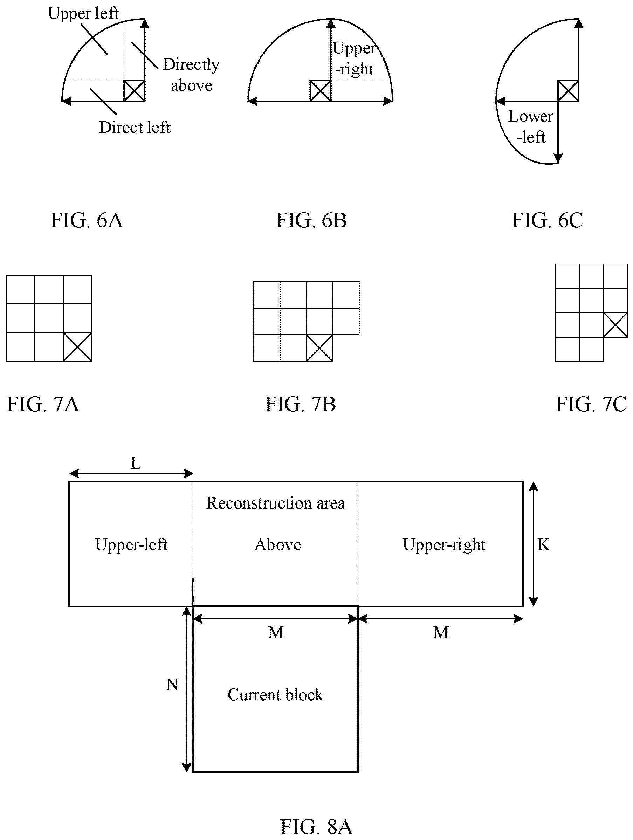

The filtering window may be classified into three types, as shown in FIG. 6A to FIG. 6C. In FIG. 6A to FIG. 6C, a rectangle with a cross represents a to-be-predicted current pixel, and a sector area represents a sector area in which neighboring positions in a filtering window are located, that is, a sector area in which reference pixels are located, when a current position of the filtering window is aligned with a position of the current pixel. Inputs of an interpolation filter are reconstructed values or predicted values of pixels in directions limited by the sector area. In the sector area shown in FIG. 6A, reference pixels are spatially located in an area directly above the current pixel, an area on the upper-left of the current pixel, and an area directly on the left of the current pixel, and there are no reference pixels in a lower-left or upper-right direction of the current pixel. In the sector area shown in FIG. 6B, reference pixels are spatially located in an area directly above the current pixel, an area on the upper-left of the current pixel, an area directly on the left of the current pixel, and an area on the upper-right of the current pixel, and there is no reference pixel in a lower-left direction of the current pixel. In the sector area shown in FIG. 6C, the reference pixels are spatially located in an area directly above the current pixel, an area on the upper-left of the current pixel, an area directly on the left of the current pixel, and an area on the lower-left of the current pixel, and there is no reference pixel in an upper-right direction of the current pixel.

In an exemplary embodiment of the present disclosure, corresponding to the three cases shown in FIG. 6A to FIG. 6C, the filtering window has the following three types:

> a plurality of neighboring positions in the filtering window are located directly above the current position, on the upper-left of the current position, or on the left of the current position, where an example of such a filtering window is shown in FIG. 7A and corresponds to FIG. 6A;
> a plurality of neighboring positions in the filtering window are located directly above the current position, on the upper-left of the current position, on the left of the current position, and on the upper-right of the current position, where an example of such a filtering window is shown in FIG. 7B and corresponds to FIG. 6B; and
> a plurality of neighboring positions in the filtering window are located directly above the current position, on the upper-left of the current position, on the left of the current position, and on the lower-left of the current position, where an example of such a filtering window is shown in FIG. 7C and corresponds to FIG. 6C.

In FIG. 7A to FIG. 7C, a small square with diagonal lines represents the current position, and other small squares are neighboring positions. In this embodiment, the filtering window of the current block is rectangular or L-shaped, and includes one current position corresponding to the current pixel and at least two neighboring positions corresponding to the reference pixels.

In different types of filtering windows, to ensure the reference pixels in the current block used in pixel-by-pixel prediction are all predicted pixels, different prediction sequences may be selected.

In an example of this embodiment, prediction sequences for different filtering windows are as follows:

in a case in which the plurality of neighboring positions in the filtering window are located directly above the current position, on the upper-left of the current position, and on the left of the current position, the performing the pixel-by-pixel prediction on the pixels in the current block includes: performing, in the current block, the pixel-by-pixel prediction in a sequence from left to right and then from top to bottom, or in a sequence from top to bottom and then from left to right, or in a sequence in a diagonal direction, or in a Zig-Zag sequence; or

in a case in which the plurality of neighboring positions in the filtering window are located directly above the current position, on the upper-left of the current position, on the left of the current position, and on the lower-left of the current position, the performing the pixel-by-pixel prediction on the pixels in the current block includes: performing, in the current block, the pixel-by-pixel prediction in a sequence from top to bottom and then from left to right; or

in a case in which the plurality of neighboring positions in the filtering window are located directly above the current position, on the upper-left of the current position, on the left of the current position, and on the upper-right of the current position, the performing the pixel-by-pixel prediction on the pixels in the current block includes: performing, in the current block, the pixel-by-pixel prediction in a sequence from left to right and then from top to bottom.

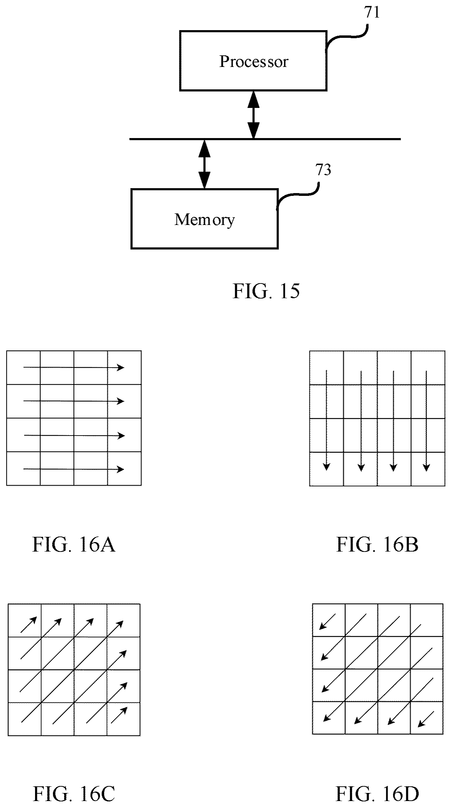

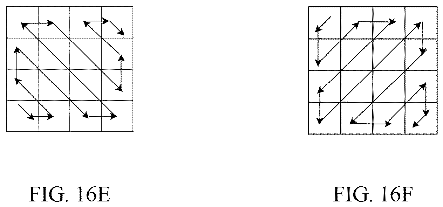

The filtering window shown in FIG. 4A is used as an example. A sequence from left to right and then from top to right is P0,P1,P2, P3,P4,P5,P6,P7,P8,P9,P10,P11,P12,P13,P14, a sequence from top to right and then from left to right is P0,P4,P8,P12,P1,P5,P9,P13,P2,P6,P10,P14,P3,P7,P11, a sequence in a diagonal direction is P0,P1,P4,P2,P5,P8,P3,P6,P9,P12,P7,P10,P13,P11,P14 or P0,P4,P1, P8,P5,P2,P12,P9,P6,P3,P13,P10,P7,P14,P11, and a Zig-Zag sequence is an alternating sequence. Scanning from left to right is also referred to as horizontal scanning, as shown in FIG. 16A, and scanning from top to bottom is also referred to as vertical scanning, as shown in FIG. 16B. The two diagonal scanning manners are shown in FIG. 16C and FIG. 16D, and the two Zig-Zag scanning manners are shown in FIG. 16E and FIG. 16F.

When the foregoing filtering windows are used, inputs of a filter may come from reconstructed values of reconstructed pixels and/or predicted values of predicted pixels in a part on the upper-left of a to-be-predicted current pixel (that is, a current to-be-interpolated position), a part directly above the to-be-predicted current pixel, a part on the upper-right of the to-be-predicted current pixel, a part directly on the left of to-be-predicted current pixel, and a part on the lower-left of the to-be-predicted current pixel. When performing pixel-by-pixel prediction on a current block, a plurality of filtering windows in different shapes and/or dimensions are allowed to be used for attempts, thereby improving prediction performance.

In addition to the filtering windows, a shape and a dimension of a reconstruction area also affect a prediction result.

In an exemplary embodiment of the present disclosure, the reconstruction area neighboring to the current block includes any one or more of the following areas adjacent to the current block:

an upper reconstruction area above the current block, where each upper reconstruction area includes one area or two consecutive areas or three consecutive areas among an area on the upper-left of the current block, an area directly above the current block, and an area on the upper-right of the current block;

a left reconstruction area on the left of the current block, where each left reconstruction area includes one area or two consecutive areas or three consecutive areas among an area on the upper-left of the current block, an area directly on the left of the current block, and an area on the lower-left of the current block; or

an L-shaped reconstruction area above and on the left of the current block, where each L-shaped reconstruction area includes an area directly above the current block, an area on the upper-left of the current block, and an area directly on the left of the current block, or includes one or two of an area directly above the current block, an area on the upper-left of the current block, an area directly on the left of the current block, an area on the upper-right of the current block, or an area on the lower-left of the current block.

In this specification, the foregoing "upper reconstruction area", "left reconstruction area", and "L-shaped reconstruction area" are referred to as reconstruction area types.

As shown in FIG. 8A, one reconstruction area neighboring to a current block is an upper reconstruction area, including an area directly above the current block, an area on the upper-left of the current block, and an area on the upper-right of the current block. Alternatively, the upper reconstruction area may include only the area directly above the current block, or only the area on the upper-left of the current block, or only the area on the upper-right of the current block, or only the area directly above the current block and the area on the upper-right of the current block, or only the area directly above the current block and the area on the upper-left of the current block. In this embodiment, the upper reconstruction area is a continuous area.

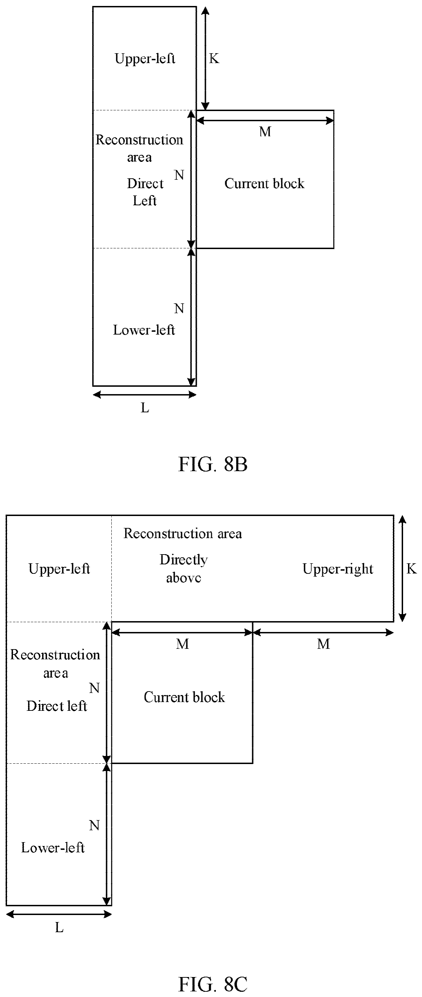

As shown in FIG. 8B, one reconstruction area neighboring to a current block is a left reconstruction area, including an area on the upper-left of the current block, an area directly on the left of the current block, and an area on the lower-left of the current block. Alternatively, the left reconstruction area may include only the area on the upper-left of the current block, or only the area directly on the left of the current block, or only the area on the lower-left of the current block, or only the area directly on the left of the current block and the area on the upper-left of the current block, or only the area directly on the left of the current block and the area on the lower-left of the current block. In this embodiment, the left reconstruction area is a continuous area.

As shown in FIG. 8C, one reconstruction area neighboring to a current block is an L-shaped reconstruction area, including an area directly above the current block, an area on the upper-left of the current block, an area directly on the left of the current block, an area on the upper-right of the current block, and an area on the lower-left of the current block. A position of each area relative to the current block is as defined in FIG. 8C. Alternatively, the L-shaped reconstruction area may include only the area directly above the current block, the area on the upper-left of the current block, and the area directly on the left of the current block, or include only the area directly above the current block, the area on the upper-left of the current block, the area directly on the left of the current block, and the area on the upper-right of the current block, or include only the area directly above the current block, the area on the upper-left of the current block, the area directly on the left of the current block, and the area on the lower-left of the current block. In this embodiment, the L-shaped reconstruction area is a continuous area.

In addition to a plurality of types, a dimension of the reconstruction area neighboring to the current block may also be determined based on a dimension of the current block (that is, may be a dependent variable that uses the dimension of the current block as an independent variable). As shown in FIG. 8A to FIG. 8C, a current block is a rectangular current block, a width of the current block is M, and a height of the current block is N, where M and N may be represented by quantities of pixels, for example, $8\times8$, $8\times16$, or $4\times8$. FIG. 8C is used as an example. An overall width and an overall height of the part on the upper-left of the current block, the part directly above the current block, and the part on the upper-right of the current block that are in the L-shaped reconstruction area neighboring to the current block are respectively 2M+L and K; and an overall width and an overall height of a part directly on the left of the current block and a part on the lower-left of the current block that are in the L-shaped reconstruction area are respectively L and 2N. After the width and the height of the current block are determined, the reconstruction area may be uniquely determined with reference to the preset K and L, where K represents a quantity of rows of the reconstruction area above the current block, and L represents a quantity of columns of the reconstruction area on the left of the current block. Similar to that in FIG. 8C, a dimension of the upper reconstruction area in FIG. 8A and a dimension of the left reconstruction area in FIG. 8B also change with a dimension of the current block, and a corresponding reconstruction area may be uniquely determined with reference to the preset K and L.

In an exemplary embodiment of the present disclosure, the reconstruction area neighboring to the current block comprises only one reconstruction area. Alternatively, the reconstruction area neighboring to the current block comprises a plurality of reconstruction areas, and the reconstruction areas are different from each other in at least one of type, width, height, or position.

In this specification, types of reconstruction areas include an upper reconstruction area, a left reconstruction area, and an L-shaped reconstruction area, and a reconstruction area may be an upper reconstruction area, a left reconstruction area, or an L-shaped reconstruction area.

In this embodiment of the present disclosure, for current blocks in a same dimension, a plurality of types of reconstruction areas or a plurality of reconstruction areas of a same type but in different dimensions may be set. The L-shaped reconstruction area shown in FIG. 8A is used as an example. By setting K = L = 8, one reconstruction area neighboring to the current block is obtained; or by setting K = L = 13, another reconstruction area neighboring to the current block is obtained. If the three types of reconstruction area shown in FIG. 8A to FIG. 8C are set for a same current block, and two reconstruction areas are obtained for each type of reconstruction area by setting K = L = 8 and K = L = 13, a total of six reconstruction areas neighboring to the current block may be obtained. In another example, values of K and L may be other values, for example, may be associated with a dimension of a current block, so that values of K and L of current blocks of different sizes are different, where K and L are integers greater than 0. In another example, more than three sets of values may be set for the combination of K and L, to obtain more different reconstruction areas.

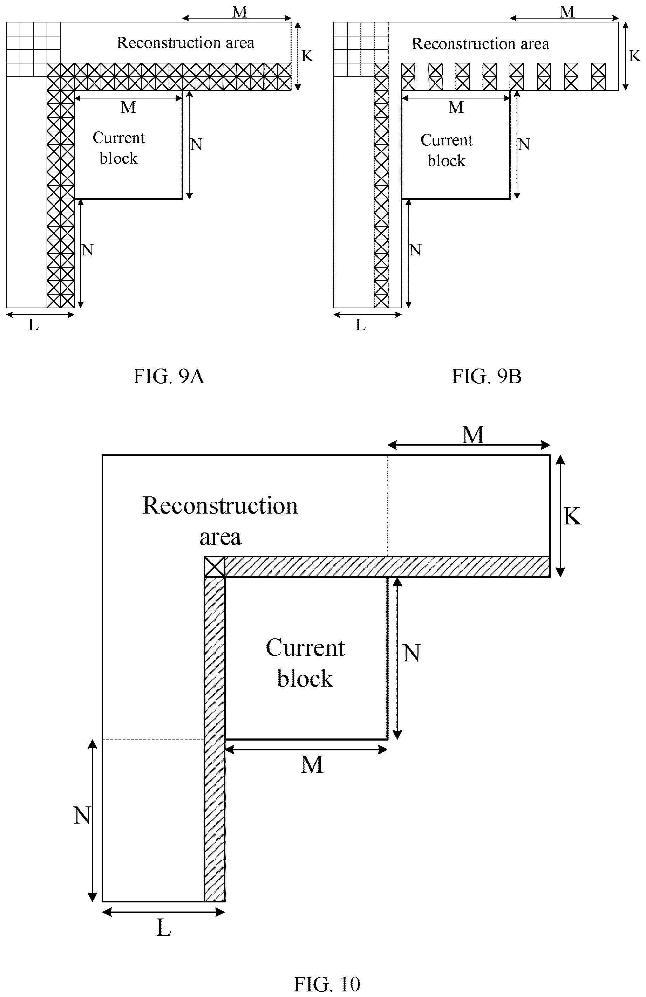

A quantity (corresponding to K in FIG. 10) of rows that are in a reconstruction area neighboring to a current block and are above the current block and a quantity (corresponding to L in FIG. 10) of columns that are in the reconstruction area neighboring to the current block and are on the left of the current block may also be determined based on a width of the current block and/or a height of the current block.

For one current block, it is assumed that two sets of values are set for the combination of K and L, that is, K1 and L1, and K2 and L2. Then:

In an example, K1 is equal to L1, K1 is equal to L2, and values of K1 and K2 correspond to a smaller value in a width of a current block and a height of the current block, that is, minWh = min(width,height). For example, K1 is equal to twice minWh, and K2 is equal to minWh.

In an example, K1 and K2 are associated with a width of a current block, and L1 and L2 are associated with a height of the current block. For example, K1 is equal to twice the width, K2 is equal to the width, L1 is equal to twice the height, and L2 is equal to the height.

In an example, K1 and K2 are associated with a height of a current block, and L1 and L2 are associated with a width of the current block. For example, K1 is equal to twice the height, K2 is equal to the height, L1 is equal to twice the width, and L2 is equal to the width.

In other examples, K1, K2, L1, and L2 are associated with a length and a height of a current block but are not multiples of the length and the height.

In an exemplary embodiment of the present disclosure, there are one or more filtering windows for a current block, and there are one or more reconstruction areas neighboring to the current block.

The determining, based on the filtering window of the current block and the reconstructed value of the pixel in the reconstruction area neighboring to the current block, the filtering coefficient used to perform interpolation filtering on the current block includes: for each combination of a filtering window of the current block and a reconstruction area neighboring to the current block, determining a group of filtering coefficients corresponding to the combination based on the filtering window in the combination and a reconstructed value of a pixel in the reconstruction area in the combination.

The performing the pixel-by-pixel prediction on the pixels in the current block according to the filtering window and the filtering coefficient, to obtain the predicted block of the current block includes: for each combination of a filtering window of the current block and a reconstruction area neighboring to the current block, performing the pixel-by-pixel prediction on the pixels in the current block according to the filtering window in the combination and a group of filtering coefficients corresponding to the combination, to obtain one predicted block of the current block.

It is easy to understand that, when filtering windows are the same but reconstruction areas are different, reconstructed values used to obtain filtering coefficients are different and thus the obtained filtering coefficients are different. In addition, when reconstruction areas are the same but filtering windows are different, reconstructed values used to obtain filtering coefficients are also different, and thus the obtained filtering coefficients are also different. For one combination of a filtering window of a current block and a reconstruction area neighboring to the current block (each combination includes one filtering window and one reconstruction area), a group of filtering coefficients may be obtained through calculation. If there are a plurality of combinations of a filtering window of a current block and a reconstruction area neighboring to the current block, a plurality of groups of filtering coefficients may be obtained through calculation. Each combination may be used as one sub-mode of an interpolation filtering mode. For example, when one filtering window as shown in FIG. 4A and six reconstruction areas (including the three types shown in FIG. 8A to FIG. 8C, where each type includes two reconstruction areas in different dimensions) are used, six groups of filtering coefficients may be obtained through calculation. When performing intra prediction by using the interpolation filtering mode, there are six sub-modes. Predicted blocks of a current block obtained through prediction according to the six sub-modes are different.

In an example of this embodiment, for each of the filtering windows of the current block, the filtering window includes one current position and a plurality of neighboring positions, and the group of filtering coefficients corresponding to a combination including the filtering window include a plurality of filtering coefficients that are in a one-to-one correspondence with the plurality of neighboring positions.

The performing the pixel-by-pixel prediction on the pixels in the current block according to the filtering window in the combination and the group of filtering coefficients corresponding to the combination includes: aligning the current pixel with a current position of the filtering window in the combination, determining pixels at all neighboring positions of the filtering window in the combination as the reference pixels neighboring to the current pixel, and performing interpolation filtering based on the pixel values of the reference pixels and the group of filtering coefficients corresponding to the combination, to obtain the predicted value of the current pixel.

FIG. 4A is used as an example. When a position of a current pixel is aligned with a current position of a filtering window, pixels at 15 neighboring positions, that is, P0 to P14, are reference pixels neighboring to the current pixel.

In an exemplary embodiment of the present disclosure, the determining the group of filtering coefficients corresponding to the combination based on the filtering window in the combination and the reconstructed value of the pixel in the reconstruction area in the combination includes:

placing the filtering window in the combination at M different positions that have reconstructed pixels in the reconstruction area in the combination, where M ≥ 1;
constructing a Wiener-Hopf equation by using M current positions in the filtering window at the M different positions as sample positions and using reconstructed values of pixels at all neighboring positions in the filtering window at the M different positions as inputs; and

solving the Wiener-Hopf equation with an objective of minimizing errors between predicted values and reconstructed values of the M current positions, to obtain the group of filtering coefficients corresponding to the combination.

In this embodiment, when M is greater than 1, the filtering window at the M different positions may be determined by moving a filtering window at an initial position according to a preset step and in a preset direction.

In this embodiment, reconstruction areas of different current blocks are different. Therefore, filtering coefficients obtained through calculation are generally different. That is, different current blocks adaptively use respective filtering coefficients.

The following describes how to construct a Wiener-Hopf equation. When constructing a Wiener-Hopf equation, a plurality of sample positions need to be determined, and the plurality of sample positions form a part of a reconstruction area of a current block. As shown in FIG. 9A, it is assumed that a 4×4 filtering window is used. A current position is located in a lower-right corner of the filtering window, and when the filtering window is placed at M positions of a reconstruction area, the current position of the filtering window at each position is one sample position. Squares with crosses in FIG. 9A are sample positions, and a range in which these sample positions are located forms a part of a reconstruction area. The reconstruction area in FIG. 9A includes six rows above the current block and six columns on the left of the current block, and the 4×4 filtering window needs to be completely placed in the reconstruction area. Therefore, the range in which the sample positions are located is a continuous area that includes two rows above the current block and two columns on the left of the current block. In FIG. 9A, the filtering window is placed at each possible position of the reconstruction area, but alternatively some of the positions may be selected to reduce an amount of computation. As shown in FIG. 9B, some of the sample positions in FIG. 9A are selected to construct the Wiener-Hopf equation. A step of the sample positions in a width direction is 2, a step of the sample positions in a height direction is 1, and a range of the sample positions is a set of discrete positions. In addition, when positions of current blocks are different, reconstructed pixels may not exist in a part of a reconstruction area. In this example, when placing the filtering window in the combination in the reconstruction area in the combination, the position is selected such that pixels covered by the filtering window at M different positions are all reconstructed pixels. However, in another example, pixel values of some pixels covered by the filtering window at the M different positions may alternatively be obtained through padding.

A sample position is denoted as r, and a range in which sample positions are located is denoted as $\mathcal{R}$. When the filtering window in the combination is placed at M different positions that have reconstructed pixels in the reconstruction area in the combination, there are M sample positions in the range $\mathcal{R}$. If coordinates of r are denoted as (x,y), each sample position in the range $\mathcal{R}$ has a group of (x,y) values. For each sample position r, an neighboring position in the filtering window in which the sample position is located may be represented as $r+p0, r+p1,...,r+pN-1$, $\{p_0,p_1,...,p_{N-1}\}$ are offsets relative to the sample positions, and may also be considered as indexes of a plurality of neighboring positions in a filtering window with the sample position r as a current position, where N is a quantity of neighboring positions in the filtering window. In the examples shown in FIG. 4A and FIG. 4B, N = 15. $t[r + p_0]$, $t[r + p_1]$, and $t[r + p_{N-1}]$ are used to respectively represent reconstructed values of pixels at N neighboring positions, and these reconstructed values are inputs for solving the Wiener-Hopf equation. t[r] represents a reconstructed value of a pixel at the sample position r, and a group of to-be-solved filtering coefficients is denoted as $c = [c_0,c_1,...,c_{N-1}]^T$, where $c_0$ is a filtering coefficient corresponding to a position $p_0$, $c_1$ is a filtering coefficient corresponding to a position $p_1$, and the rest may be deduced by analogy.

The constructed Wiener-Hopf equation is as follows:

$$\begin{bmatrix} \sum_{\|\mathcal{R}\|} t[r + p_0]t[r + p_0] & \cdots & \sum_{\|\mathcal{R}\|} t[r + p_{N-1}]t[r + p_0] \\ \vdots & \ddots & \vdots \\ \sum_{\|\mathcal{R}\|} t[r + p_0]t[r + p_{N-1}] & \cdots & \sum_{\|\mathcal{R}\|} t[r + p_{N-1}]t[r + p_{N-1}] \end{bmatrix} \begin{bmatrix} c_0 \\ \vdots \\ c_{N-1} \end{bmatrix}$$

$$= \begin{bmatrix} \sum_{\|\mathcal{R}\|} t[r]t[r + p_0] \\ \vdots \\ \sum_{\|\mathcal{R}\|} t[r]t[r + p_{N-1}] \end{bmatrix}$$

The N×N matrix in the left part of the foregoing formula is an autocorrelation coefficient matrix of the Wiener-Hopf equation, where $\sum_{\|\mathcal{R}\|} t[r+p_0]t[r+p_0]$ represents accumulation of t[r + p0]t[r + p0] corresponding to all sample positions r in the range $\mathcal{R}$, and the rest may be deduced by analogy.

After the foregoing Wiener-Hopf equation is constructed, the Wiener-Hopf equation is solved with an objective of minimizing errors between predicted values and reconstructed values of M current positions, to obtain a group of filtering coefficients corresponding to the combination. It is assumed that a predicted value that may be obtained by performing interpolation filtering on the sample position r is t[r]'. Then, to minimize the errors between the predicted values and the reconstructed values of the M current positions, an error between t[r]' and t[r] needs to be minimized, where

$$t[r]' = \sum_{n=0}^{N-1} c_n \times t[r + p_n].$$

Since consistent values of filtering coefficients need to be derived by an encoder and a decoder by using a reconstruction area, considering platform problems and computational complexity, integer precision is used to calculate the filtering coefficients (that is, computation is performed by using integers only) in this embodiment. A solving manner includes but is not limited to decomposing the autocorrelation coefficient matrix of the Wiener-Hopf equation through Cholesky decomposition or unit lower triangular matrix (LDL) decomposition.

In an example of this embodiment of the present disclosure, the performing the interpolation filtering based on the pixel values of the reference pixels and the group of filtering coefficients corresponding to the combination, to obtain the predicted value of the current pixel includes:

calculating the predicted value *pred* of the current pixel according to the following formula:

$$pred = \sum_{n=0}^{N-1}\left(t_{p_n} \times c_n\right) \qquad (1),$$

or calculating the predicted value *pred* of the current pixel according to the following formula:

$$pred = ((\sum_{n=0}^{N-1}\left(t_{p_n} \times c_n\right)) + offset) \gg shift \qquad ,$$

where $t_{p_n}$ is a pixel value of an $n^{th}$ reference pixel of the current pixel, *n = 0,1,...,N-1*, $c_n$ is a filtering coefficient that corresponds to the $n^{th}$ reference pixel in the group of filtering coefficients, N is a quantity of the reference pixels, that is, a quantity of filtering coefficients included in the group of filtering coefficients, *offset* and *shift* are predefined values, and ">>" indicates a right shift operation on a binary number. For example, ">>3" represents a right shift by three bits, and the formula (2) represents a right shift by *shift* bits.

The formula (2) is a specific algorithm proposed to avoid fractional arithmetic. In the formula (2), $c_n$ is scaled up relative to $c_n$ in the formula (1). Therefore, an accumulation result needs to be corrected by using the coefficients *offset* and *shift,* where *offset* is used for offsetting and *shift* is used for scaling, to obtain an accurate value *of pred.*

In another exemplary embodiment of the present disclosure, a mean removal operation is performed on inputted reconstructed values when filtering coefficients are obtained by using the Wiener-Hopf equation. In this embodiment, the determining the corresponding group of filtering coefficients based on the filtering window in the combination and the reconstructed value of the pixel in the reconstruction area in the combination includes:

placing the filtering window in the combination at M different positions that have reconstructed pixels in the reconstruction area in the combination, where M ≥ 1;
constructing a Wiener-Hopf equation by using M current positions in the filtering window at the M different positions as sample positions and using mean-removed reconstructed values of pixels at all neighboring positions in the filtering window at the M different positions as inputs; and
solving the Wiener-Hopf equation with an objective of minimizing errors between predicted values and reconstructed values of the M current positions, to obtain the group of filtering coefficients corresponding to the combination.

A difference between the method for constructing the Wiener-Hopf equation in this embodiment and that in the foregoing embodiment lies in that: reconstructed values are used as inputs to construct the Wiener-Hopf equation in the previous embodiment, while the mean-removed reconstructed values are used as inputs to construct the Wiener-Hopf equation in this embodiment.

Assuming that the mean value is m, the Wiener-Hopf equation constructed in this embodiment is as follows:

$$\begin{bmatrix} \sum_{||\mathcal{R}||}(t[r+p_0]-m)(t[r+p_0]-m) & \cdots & \sum_{||\mathcal{R}||}(t[r+p_{N-1}]-m)(t[r+p_0]-m) \\ \vdots & \ddots & \vdots \\ \sum_{||\mathcal{R}||}(t[r+p_0]-m)(t[r+p_{N-1}]-m) & \cdots & \sum_{||\mathcal{R}||}(t[r+p_{N-1}]-m)(t[r+p_{N-1}]-m) \end{bmatrix} \begin{bmatrix} c_0 \\ \vdots \\ c_{N-1} \end{bmatrix}$$

$$= \begin{bmatrix} \sum_{||\mathcal{R}||}(t[r]-m)(t[r+p_0]-m) \\ \vdots \\ \sum_{||\mathcal{R}||}(t[r]-m)(t[r+p_{N-1}]-m) \end{bmatrix}$$

In an example of this embodiment, the mean-removed reconstructed values are obtained by subtracting the mean value from the reconstructed values, and the mean value is obtained in the following manner:

averaging reconstructed values of all pixels in the reconstruction area in the combination, to obtain the mean value; or
averaging reconstructed values of some pixels in the reconstruction area in the combination, to obtain the mean value; or
using a reconstructed value of one specified pixel in the reconstruction area in the combination as the mean value.

Referring to the example shown in FIG. 10, the reconstruction area of the current block includes K rows above the current block and L columns on the left of the current block. When averaging reconstructed values of all pixels in the reconstruction area in the combination, the reconstructed values of all the pixels in the entire reconstruction area are averaged, to obtain the mean value. When averaging reconstructed value of some pixels in the reconstruction area in the combination, the some pixels may include pixels in one or more adjacent rows above the current block, and/or pixels in one or more adjacent columns on the left of the current block. Exemplarily, in FIG. 10, the some pixels are located in an area filled with cross-section lines, which includes one adjacent row above the current block and one adjacent column on the left of the current block. The pixels include pixels directly above the current block and in the upper-right direction of the current block, in one adjacent row above the current block, and pixels on the directly left of the current block and in the lower-left direction of the current block, in one adjacent column on the left of the current block. The using the reconstructed value of the one specified pixel in the reconstruction area in the combination as the mean value may be: using a reconstructed value of one pixel that is in the reconstruction area and is adjacent to an upper-left corner of the current block as the mean value. The pixel is represented by a small square with a cross in FIG. 10. Calculating the mean value by using reconstructed values of some pixels may simplify calculation. In addition to simplifying calculation, using a reconstructed value of one pixel as the mean value may also avoid a division operation in calculation of the mean value.

In a case in which the filtering coefficients are solved based on mean-removed reconstructed values, when performing prediction on the current pixel, the pixel values of the reference pixels need to be mean-removed first, and then multiplied by corresponding filtering coefficients and accumulated, and the mean result needs to be added to an accumulation result.

In an example of this embodiment, in a case in which the group of filtering coefficients is obtained by solving the Wiener-Hopf equation that uses mean-removed reconstructed values as inputs, the performing interpolation filtering based on the pixel values of the reference pixels and the group of filtering coefficients corresponding to the combination, to obtain the predicted value of the current pixel includes: calculating the predicted value *pred* of the current pixel according to the following formula:

$$pred = \sum_{n=0}^{N-1}\left((t_{p_n}-m)\times c_n\right)+m,$$

where $t_{p_n}$ is a pixel value of an $n^{th}$ reference pixel of the current pixel, $n = 0,1,...,N-1$, $c_n$ is a filtering coefficient that corresponds to the $n^{th}$ reference pixel in the group of filtering coefficients, N is a quantity of the reference pixels, that is, a quantity of filtering coefficients included in the group of filtering coefficients, and m is the mean value used to calculate the mean-removed reconstructed values.

In this embodiment, mean-removed interpolation filtering is used, and a corresponding filter may be referred to as a mean-removed filter. Filtering coefficients obtained by constructing the Wiener-Hopf equation by using mean-removed reconstructed values as inputs may achieve a better prediction effect. The mean value used for mean removal may be a mean value of reconstructed values of pixels in the entire reconstruction area, or may be a mean value derived from reconstructed values of some pixels (which may be one or more pixels) in the reconstruction area.

According to the intra prediction method based on interpolation filtering proposed in embodiments of the present disclosure, previously calculated predicted values may be used as inputs to predict some positions. Since errors of the predicted values relative to an original value are generally greater than errors of reconstructed values relative to the original value, such recursive prediction may cause an increase in an accumulated error. An impact of error accumulation on a prediction effect may be mitigated by limiting an output range of an interpolation filter.

In an exemplary embodiment of the present disclosure, performing the interpolation filtering based on the pixel values of the reference pixels and the filtering coefficient, to obtain the predicted value of the current pixel includes:

performing the interpolation filtering based on the pixel values of the reference pixels and the filtering coefficient, to obtain an initial predicted value;
when the initial predicted value exceeds a predicted value range of the current block, correcting the initial predicted value, so that the corrected predicted value falls within the predicted value range of the current block; and
using the corrected predicted value as the predicted value of the current pixel.

In an example of an embodiment of the present disclosure, the correcting the initial predicted value includes:

when the initial predicted value is greater than a maximum value of the predicted value range, using the maximum value as the corrected predicted value; or
when the initial predicted value is less than a minimum value of the predicted value range, using the minimum value as the corrected predicted value.

In this example, the predicted value range may be determined in one of the following manners.

Each output value is caused to fall within a predicted value range allowed by data, where the predicted value range may be determined based on a data depth of a predicted value. For example, for a predicted value with a depth of eight bits, a prediction result should be limited within a range of 0 to $2^8$ - 1.

The range may be narrowed down. For example, the range is determined based on a maximum reconstructed value and a minimum reconstructed value of pixels in entire or a part of a reconstruction area used to determine the filtering coefficient. In an example, after a minimum reconstructed value and a maximum reconstructed value of pixel values in a corresponding reference area or a part of the reference area are found, the minimum reconstructed value is used as the minimum value of the predicted value range and the maximum reconstructed value is used as the maximum value of the predicted value range. In another example, the foregoing range formed by the minimum value and the maximum value may be appropriately expanded or narrowed down. The found minimum reconstructed value decreased by a preset deviation is used as the minimum value of the predicted value range. The found minimum reconstructed value added by another preset deviation is used as the maximum value of the predicted value range. The preset deviations are positive values or negative values.

By limiting an output range of an interpolation filter, this embodiment of the present disclosure may avoid excessive error accumulation caused by pixel-by-pixel prediction.

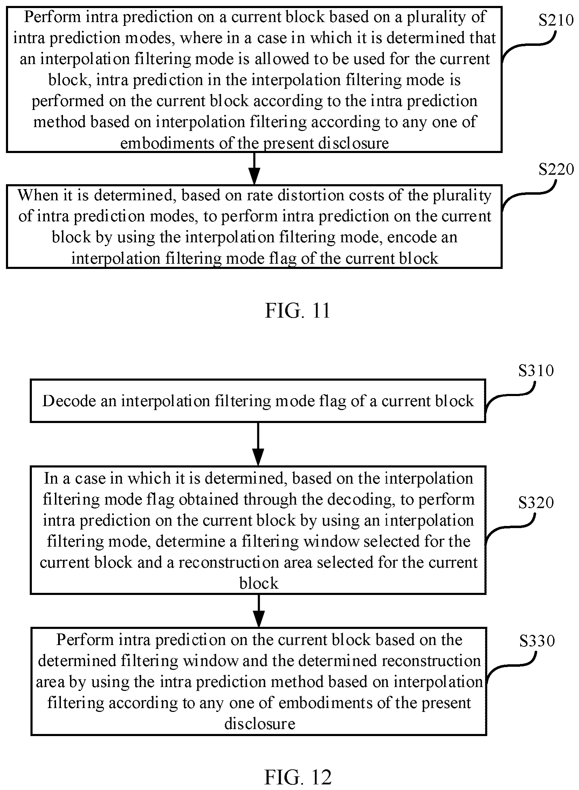

An embodiment of the present disclosure further provides a video encoding method. As shown in FIG. 11, the method includes the following steps.

Step S210: Perform intra prediction on a current block based on a plurality of intra prediction modes, where in a case in which it is determined that an interpolation filtering mode is allowed to be used for the current block, intra prediction in the interpolation filtering mode is performed on the current block by using the intra prediction method based on interpolation filtering according to any one of embodiments of the present disclosure.

Step S220: In a case in which it is determined, based on rate distortion costs of the plurality of intra prediction modes, to perform intra prediction on the current block by using the interpolation filtering mode, encode an interpolation filtering mode flag of the current block, to indicate performing intra prediction on the current block by using the interpolation filtering mode.

In this embodiment of the present disclosure, an interpolation filtering mode is introduced as an intra prediction mode, and when it is determined to use the interpolation filtering mode to perform intra prediction on the current block, an interpolation filtering mode flag of the current block is encoded. Use of the newly added intra prediction mode may improve compression efficiency.

In an example of this embodiment, the rate distortion costs of the plurality of intra prediction modes may be compared with each other, and when a rate distortion cost of the interpolation filtering mode is the smallest, it is determined that intra prediction is performed on the current block by using the interpolation filtering mode.

Some limiting conditions may be added for use of the interpolation filtering mode. For example, when the current block is a chroma block, the interpolation filtering mode is not used for intra prediction during encoding, but a DM (direct mode) mode may be selected for the chroma block, so that an intra prediction mode of a luma block may be directly used for the chroma block. For another example, a flag at a sequence level, a picture level, or a slice (Slice) level may be used to indicate whether the interpolation filtering mode is allowed to be used to encode the current block, or related general constraints information (GCI: general constraints information) may be set to indicate whether the interpolation filtering mode is forbidden to be used. For another example, a dimension of the current block for which the interpolation filtering mode is used may be limited. In addition, when the current block is located at a picture boundary, the interpolation filtering mode may be forbidden to be used because there is no sufficient reconstruction area to place a filtering window.

In an exemplary embodiment of the present disclosure, determining that the interpolation filtering mode is allowed to be used for the current block includes: determining that the interpolation filtering mode is allowed to be used for the current block when none of conditions for forbidding use of the interpolation filtering mode is met, where the conditions for forbidding use of the interpolation filtering mode include any one or more of the following conditions:

the current block is a chroma block;
a sequence-level flag indicates that the interpolation filtering mode is not allowed to be used;
a picture-level flag indicates that the interpolation filtering mode is not allowed to be used;
a slice-level flag indicates that the interpolation filtering mode is not allowed to be used;
a GCI identifier indicates that the interpolation filtering mode is forbidden to be used;
a dimension of the current block does not meet a maximum block dimension and/or a minimum block dimension for enabling the interpolation filtering mode;
a difference between a horizontal coordinate of an upper-left corner of the current block and a horizontal coordinate of an upper-left corner of a current picture is less than a preset first threshold; or
a difference between a vertical coordinate of an upper-left corner of the current block and a vertical coordinate of an upper-left corner of a current picture is less than a preset second threshold.

In an exemplary embodiment of the present disclosure, at an encoding end, as described in the foregoing embodiment, a plurality of combinations of a filtering window and a reconstruction area may be used to perform intra prediction based on interpolation filtering on one current block, and each combination may be considered as a sub-mode of the interpolation filtering mode.

In this embodiment, the performing the intra prediction in the interpolation filtering mode on the current block includes:

determining a combination of a filtering window of the current block and a reconstruction area neighboring to the current block that is used to perform intra prediction in the interpolation filtering mode on the current block, where K combinations correspond to K sub-modes of the interpolation filtering mode, and for each of the sub-modes, performing, based on the filtering window of the current block and the reconstruction area neighboring to the current block that are in a combination corresponding to the respective sub-mode, the intra prediction based on interpolation filtering on the current block, where K is a quantity of combinations, and $K \geq 2$;
determining, based on the rate distortion costs of the plurality of intra prediction modes, to perform intra prediction on the current block by using the interpolation filtering mode includes: using a smallest value in rate distortion costs of the K sub-modes as a rate distortion cost of the interpolation filtering mode, and comparing the rate distortion cost of the interpolation filtering mode with a rate distortion cost of another intra prediction mode in the plurality of intra prediction modes; and
when the rate distortion cost of the interpolation filtering mode is the smallest, the method further includes: encoding index information that is used to indicate a sub-mode with the smallest rate distortion cost in the K sub-modes.

In a case in which the encoding end determines to use the interpolation filtering mode to perform the intra prediction on the current block and a plurality of sub-modes exist, to prevent a decoding end from re-selecting a sub-mode, an index of a selected sub-mode with the smallest rate distortion cost (that is, the selected sub-mode) may be encoded into a bitstream.

In an exemplary embodiment of the present disclosure, the index that indicates the sub-mode with the smallest rate distortion cost in the K sub-modes includes any one or more of the following indexes:

a sub-mode index, where each sub-mode index corresponds to one combination of a filtering window of the current block and a reconstruction area neighboring to the current block;
a reconstruction area index of the current block, where each reconstruction area index corresponds to one reconstruction area;

a parameter index of the reconstruction area of the current block, where a parameter of the reconstruction area includes at least one of a dimension or a type, the dimension includes at least one of a quantity of rows of the reconstruction area above the current block or a quantity of columns of the reconstruction area on the left of the current block, there may be a plurality of parameter indexes of the reconstruction area, for example, including one dimension index and one type index, and there may be only one parameter index, for example, one value of the parameter index indicates one combination of a dimension of the current block and a type of the current block;

a filtering window index of the current block, where each filtering window index corresponds to one filtering window; or

a parameter index of the filtering window of the current block, where a parameter of the filtering window includes at least one of a shape, a dimension, or a quantity of neighboring positions.

In this embodiment, index information of a sub-mode may be indicated in many manners. In the foregoing example, intra prediction based on interpolation filtering is performed on the current block by using one filtering window (4×4) and six reconstruction areas (two upper reconstruction areas, two left reconstruction areas, and two L-shaped reconstruction areas). There are a total of six combinations of a filtering window and a reconstruction area, and there are six sub-modes. A sub-mode index is an index obtained by uniformly numbering all sub-modes. For example, in a case in which a rate distortion cost of a first sub-mode is the smallest, the sub-mode index is 0; or if a rate distortion cost of a fifth sub-mode is the smallest, the sub-mode index is 4. Since there is only one filtering window, the sub-mode index in this example may also be considered as a reconstruction area index. In addition to uniformly numbering the sub-modes, in other examples, filtering windows and reconstruction areas that participate in the combinations may be separately numbered to obtain respective indexes. For example, when three filtering windows (referring to FIG. 7A to FIG. 7C) and six reconstruction areas are used for the current block, if the rate distortion cost of the combination of a second filtering window and a fourth reconstruction area are the smallest, a filtering window index may be encoded and has a value of 1. In addition, a reconstruction area index is encoded and has a value of 3. In addition, a finer parameter index may also be used to indicate index information of a sub-mode. For example, one filtering window and six reconstruction areas are used for the current block. When the six reconstruction areas are divided into three types, that is, an upper reconstruction area, a left reconstruction area, and an L-shaped reconstruction area, and each type has two reconstruction areas in different dimensions (for example, K = L = 8 and K = L = 13), a 2-bit reconstruction area type index may be used to indicate a type of a selected sub-mode, and a 1-bit dimension index is used to indicate a value of K and L of the selected sub-mode. That is, a reconstruction area in a combination corresponding to the selected sub-mode may be uniquely determined. When a plurality of filtering windows are used for the current block and the plurality of filtering windows are partitioned based on a plurality of parameters, a parameter index of a filtering window may be used to indicate a filtering window in a combination corresponding to a selected sub-mode, and details are not described again.

In this embodiment of the present disclosure, before a prediction mode and a transform mode used for each intra coding block are decided, it is determined whether an intra prediction technology in the interpolation filtering mode may be used for the current block. If a current related flag, for example, a sequence-level flag, allows use of the interpolation filtering-based prediction technology, and conditions such as a size and a position of the current block are met, filtering coefficients in a corresponding sub-mode is obtained according to each combination of a filtering window of the current block and a reconstruction area neighboring to the current block. In addition, pixel-by-pixel prediction is performed on the current block based on the filtering coefficients of the sub-mode, to obtain a predicted block of the current block.

The plurality of intra prediction modes for the current block may be compared with each other by using costs of two phases, to select one mode used for the current block. In a coarse screening phase of a prediction mode for the current block, a cost of each potential intra prediction mode (including each sub-mode of the interpolation filtering mode) is calculated, and a formula for calculating the cost is as follows:

$$cost = D + \lambda R,$$

where R represents a bit overhead estimated to be consumed to encode the intra prediction mode, $\lambda$ is a Lagrange multiplier, which is related to a quantizer parameter used for current encoding, and D represents a distortion value between a predicted block and an original block in a current prediction mode. The distortion value may be calculated by using the following formula:

$$D = min(SAD \times 2, SATD),$$

where *SAD* represents a sum of absolute differences (The sum of absolute difference) between the predicted block and the original block, and *SATD* represents a sum of Hadamard transformed differences (The sum of transformed difference) between the predicted block and the original block.

Complete residual transform, quantization, inverse quantization, inverse transform, and reconstruction are performed on each prediction mode obtained by the coarse screening, and rate distortion costs of mode combinations (that is, combinations of a prediction mode, a transform mode, and a quantization mode) are compared with each other, to determine a final prediction mode, a final transform mode, and a final quantized residual value. In this phase, a rate distortion cost is still calculated as follows: $cost = D + \lambda R$. However, herein, D represents a sum of squared errors (SSE: the sum of squared error) between a reconstructed block and the original block, and R indicates an overall bit overhead used to encode a mode identifier, a coefficient, and the like of the current block.

A rate distortion cost algorithm used in the present disclosure is not limited thereto. For example, an error in a rate distortion cost formula may also be indicated by using a mean absolute difference (MAD: Mean Absolute Difference), a mean squared error (MSE: Mean Squared Error), or the like.

An embodiment of the present disclosure further provides a video decoding method. As shown in FIG. 12, the method includes the following steps.

Step S310: Decode an interpolation filtering mode flag of a current block.

Step S320: In a case in which it is determined, based on the decoded interpolation filtering mode flag, to perform intra prediction on the current block by using an interpolation filtering mode, determine a filtering window selected for the current block and a reconstruction area selected for the current block.

Step S330: Perform intra prediction on the current block based on the determined filtering window and the determined reconstruction area by using the intra prediction method based on interpolation filtering according to any one of embodiments of the present disclosure.

The filtering window and the reconstruction area selected for the current block are one filtering window and one reconstruction area in one combination (corresponding to a selected sub-mode) selected by an encoding end for the current block. When a plurality of combinations of a filtering window and a reconstruction area exist in the interpolation filtering mode of the encoding end, the encoding end may encode index information of a selected combination into a bitstream. At a decoding end, interpolation filtering needs to be performed based on only one combination of a filtering window and a reconstruction area, and selection from a plurality of combinations is not required.

According to the video decoding method in this embodiment of the present disclosure, whether intra prediction is performed on the current block by using the interpolation filtering mode may be determined by parsing syntax elements related to the interpolation filtering mode of the current block. By introducing the interpolation filtering mode, overall efficiency of video encoding and decoding may be improved.

In an exemplary embodiment of the present disclosure, before the decoding the interpolation filtering mode flag of the current block, the method further includes any one or more of the following processing:

decoding a sequence-level flag that indicates whether an interpolation filtering mode is allowed to be used, and decoding the interpolation filtering mode flag of the current block in a case in which a value of the sequence-level flag indicates that the interpolation filtering mode is allowed to be used, or skipping decoding the interpolation filtering mode flag of the current block in a case in which a value of the sequence-level flag indicates that the interpolation filtering mode is not allowed to be used;

decoding a picture-level flag that indicates whether an interpolation filtering mode is allowed to be used, and decoding the interpolation filtering mode flag of the current block in a case in which a value of the picture-level flag indicates that the interpolation filtering mode is allowed to be used, or skipping decoding the interpolation filtering mode flag of the current block in a case in which a value of the picture-level flag indicates that the interpolation filtering mode is not allowed to be used;

decoding a slice-level flag that indicates whether an interpolation filtering mode is allowed to be used, and decoding the interpolation filtering mode flag of the current block in a case in which a value of the slice-level flag indicates that the interpolation filtering mode flag of the current block is allowed to be used, or skipping decoding the interpolation filtering mode flag of the current block in a case in which a value of the slice-level flag indicates that the interpolation filtering mode is not allowed to be used; or

decoding a general constraints information GCI identifier that indicates whether an interpolation filtering mode is forbidden to be used, and decoding, in a case in which a value of the GCI identifier indicates that the interpolation filtering mode is not forbidden to be used, a sequence-level flag that indicates whether the interpolation filtering mode is allowed to be used, or skipping decoding, in a case in which a value of the GCI identifier indicates that the interpolation filtering mode is forbidden to be used, a sequence-level flag that indicates whether the interpolation filtering mode is allowed to be used, where the sequence-level flag indicates by default that the interpolation filtering mode is not allowed to be used.

In an example of this embodiment, a sequence-level flag that indicates whether the interpolation filtering mode is allowed to be used is used, and a related syntax element is shown in the following table.

Syntax element identifier of a sequence-level parameter set (SPS) (sequence parameter set syntax)

| seq_parameter_set_rbsp( ) { | Descriptor |
|---|---|
| ... ... | |
| **sps_eip_enabled_flag** | u(1) |
| ... ... | |
| } | |

In the foregoing table, if sps_eip_enabled_flag is equal to 1, it indicates that the interpolation filtering mode is allowed to be used, that is, it is defined that an intra prediction technology based on interpolation filtering is allowed to be enabled in a coded layer video sequence (CLVS: coded layer video sequence). If sps_eip_enabled_flag is equal to 0, it indicates that the interpolation filtering mode is not allowed to be used, that is, it is defined that the intra prediction technology based on interpolation filtering is disabled in the coded layer video sequence.

In an example of this embodiment, a GCI identifier that indicates whether the interpolation filtering mode is forbidden to be used is used, and a related syntax element is shown in the following table.

Syntax element identifier of general constraints information (GCI) (general constraints information syntax)

| general_constraints_info( ) { | Descriptor |
|---|---|
| **gci_present_flag** | u(1) |
| if( gci_present_flag ) { | |
| ... ... | |
| **gci_no_eip_constraint_flag** | u(1) |
| ... ... | |
| } | |

In the foregoing table, if gci_no_eip_constraint_flag is equal to 1, it indicates that the interpolation filtering mode is forbidden to be used, that is, it is defined that a sequence-level intra prediction technology based on interpolation filtering must be 0 for all pictures, i.e., not allowed to be used. If gci_no_eip_constraint_flag is equal to 0, it indicates that the interpolation filtering mode is not forbidden to be used, and a restriction that the interpolation filtering mode is forbidden to be used is not introduced.

In an example of this embodiment, a picture-level flag that indicates whether the interpolation filtering mode is allowed to be used is used, and a related syntax element is shown in the following table.

Syntax element identifier of a picture header structure (picture header structure syntax)

| picture_header_structure( ) { | Descriptor |
|---|---|
| ... ... | |
| if ( sps_eip_enabled_flag ) { | |
| **ph_eip_enabled_flag** | u(1) |
| } | |
| ... ... | |

(continued)

| | |
|---|---|
| } | |

In the foregoing table, if ph_eip_enabled_flag is equal to 1, it indicates that the interpolation filtering mode is allowed to be used, that is, it is defined that an intra prediction technology based on interpolation filtering is allowed to be enabled in a current picture. If ph_eip_enabled_flag is equal to 0, it indicates that the interpolation filtering mode is not allowed to be used, that is, it is defined that the intra prediction technology based on interpolation filtering is disabled in the current picture. If this syntax element does not exist in a current sequence, a default value is 0.

In addition to a syntax identifier in a picture header structure, a picture-level flag that indicates whether the interpolation filtering mode is allowed to be used may alternatively be a syntax primitive identifier of a picture parameter set (PPS: picture parameter set syntax).

In an example of this embodiment, a flag at a slice (Slice) level that indicates whether the interpolation filtering mode is allowed to be used is used, and a related syntax element is shown in the following table.

Syntax element identifier of a slice-level header (slice header syntax)

| slice_header( ) { | Descriptor |
|---|---|
| ... ... | |
| if( sps_eip_enabled_flag ) { | |
| sh_eip_enabled_flag | u(1) |
| } | |
| ... ... | |
| } | |

In the foregoing table, if sh_eip_enabled_flag is equal to 1, it indicates that the interpolation filtering mode is allowed to be used, that is, it is defined that the intra prediction technology based on interpolation filtering may be used for a current slice (Slice). If sh_eip_enabled_flag is equal to 0, it indicates that the interpolation filtering mode is not allowed to be used, that is, it is defined that the intra prediction technology based on interpolation filtering cannot be used for the current slice (Slice).

In an exemplary embodiment of the present disclosure, the determining the filtering window selected for the current block includes:

determining a preset filtering window as the filtering window of the current block, which is for a case in which the encoding end and the decoding end use one filtering window when performing intra prediction in the interpolation filtering mode on different current blocks, for example, the 4 x 4 filtering window, where in this case, the encoding end does not need to encode index information of the filtering window, and the decoding end may directly determine the preset filtering window as the filtering window selected for the current block; or

determining a filtering window corresponding to a block parameter of the current block as the filtering window selected for the current block, where the block parameter includes at least one of a position, a shape, or a dimension, which is for a case in which the encoding end and the decoding end can determine, based on the block parameter of the current block, the filtering window used for performing intra prediction in the interpolation filtering mode on the current block, where in this case, index information of the filtering window does not need to be encoded either, and the decoding end determines, based on the block parameter of the current block, the filtering window selected for the current block; or

decoding a sub-mode index of the current block, and determining, based on the sub-mode index, the filtering window selected for the current block, where each sub-mode index corresponds to one combination of a filtering window of the current block and a reconstruction area neighboring to the current block; or

decoding a filtering window index of the current block, and determining, based on the filtering window index, the filtering window selected for the current block, where each filtering window index corresponds to one filtering window; or

decoding a parameter index of the filtering window of the current block, determining a parameter of the filtering window based on the parameter index of the filtering window, and determining, based on the parameter, the filtering window selected for the current block, where the parameter of the filtering window includes at least one of a shape, a dimension, or a quantity of neighboring positions.

In an exemplary embodiment of the present disclosure, the determining the neighboring reconstruction area selected for the current block includes:

determining, based on a preset parameter of the reconstruction area, the reconstruction area selected for the current block, which is for a case in which the encoding end and the decoding end use one reconstruction area with a preset parameter when performing intra prediction in the interpolation filtering mode on different current blocks, and in this case index information does not need to be decoded; or

determining a reconstruction area corresponding to a block parameter of the current block as the reconstruction area neighboring to the current block, where the block parameter includes at least one of a position, a shape, or a dimension, which is for a case in which the encoding end and the decoding end can determine, based on the block parameter of the current block, the reconstruction area used for preforming intra prediction in the interpolation filtering mode on the current block, where for example, if the L-shaped reconstruction area shown in FIG. 8C is used and K = L = 13, index information of the reconstruction area does not need to be encoded, and the decoding end determines, based on the block parameter of the current block, and the preset type and values of K and L, the filtering window selected for the current block; or

decoding a sub-mode index of the current block, and determining, based on the sub-mode index, the reconstruction area selected for the current block, where each sub-mode index corresponds to one combination of a filtering window of the current block and a reconstruction area neighboring to the current block; or

decoding a reconstruction area index of the current block, and determining, based on the reconstruction area index, the reconstruction area selected for the current block, where each reconstruction area index corresponds to one reconstruction area; or

decoding a parameter index of the reconstruction area of the current block, determining a parameter of the reconstruction area based on the parameter index of the reconstruction area, and determining, based on the parameter, the reconstruction area selected for the current block. In an example, the parameter index of the reconstruction area includes at least one of a dimension index of the reconstruction area or a type index of the reconstruction area, and a dimension of the reconstruction area includes at least one of a quantity of rows of the reconstruction area above the current block or a quantity of columns of the reconstruction area on the left of the current block.

For details on the foregoing sub-mode index, reconstruction area index, filtering window index, parameter index of the reconstruction area, and parameter index of the filtering window, refer to corresponding descriptions in the encoding method. The foregoing dimension index may alternatively include a plurality of indexes such as a row quantity index and a column quantity index.

It should be noted that, when determining the filtering window and the reconstruction area selected for the current block, the filtering window and the adjacent reconstruction area may be together determined based on the sub-mode index, or may be separately determined, that is, the filtering window is determined based on configuration information or index information of the filtering window, and the adjacent reconstruction area is determined based on configuration information or index information of the reconstruction area.

For one current block on which intra prediction is performed, a reconstructed part (that is, a neighboring reconstruction area) around the current block may include an area directly above the current block, an area on the upper-left of the current block, an area on the upper-right of the current block, an area on the left of the current block, and an area on the lower-left of the current block. Due to differences in sizes, positions, and partitioning of blocks, there are not always reconstructed pixels in the five areas. For example, when the current block is located on an upper edge of a picture, there is no reconstructed pixel above the current block (including the area directly above the current block, the area on the upper-left of the current block, and the area on the upper-right of the current block). When the current block is located on a left edge of the picture, there is no reconstructed pixel on the left of the current block (including the area on the upper-left of the current block, the area directly on the left of the current block, and the area on the lower-left of the current block). Therefore, this case may be avoided by limiting a difference between a coordinate of an upper-left corner of the current block and a coordinate of an upper-left corner of the picture.

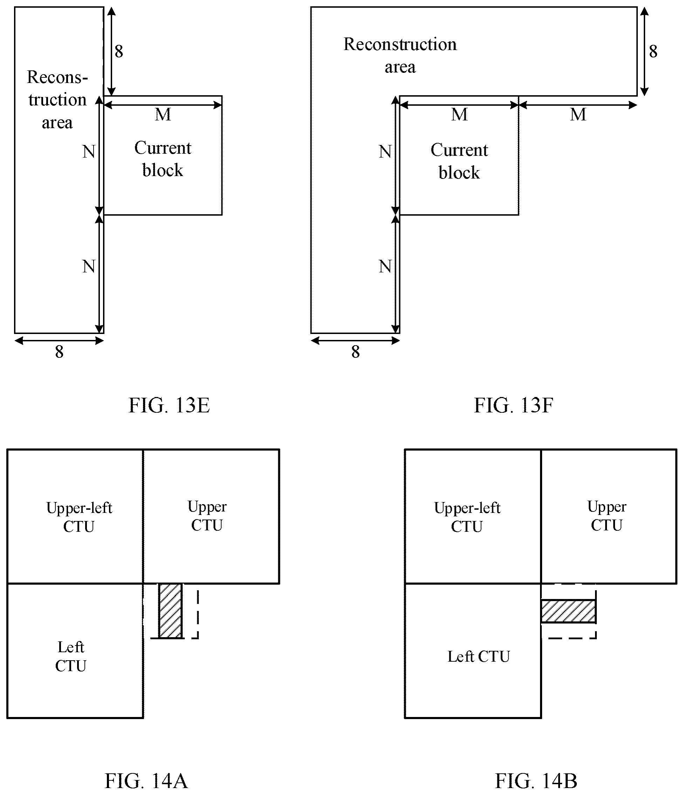

As shown in FIG. 14A and FIG. 14B, FIG. 14A and FIG. 14B are examples of two types of ternary partitioning. In these two types of partitioning, due to differences in positions, when a lower-left area of a current block and an upper-right area of the current block are located in a current CTU, farther reference rows in a reconstruction area may have reconstructed values (that is, reconstructed pixels) but nearer reference rows may have no reconstruction pixels. When both the area on the lower-left area of the current block and the area on the upper-right area of the current block are located in another CTU, reference rows in the reconstruction area have reconstructed values.

In an exemplary embodiment of the present disclosure, before the decoding the interpolation filtering mode flag of the current block, the method further includes any one or more of the following processing:

determining whether a dimension of the current block meets a maximum block dimension and/or a minimum block dimension for enabling the interpolation filtering mode, and decoding the interpolation filtering mode flag of the current block in a case in which the dimension of the current block meets the maximum block dimension and/or the minimum block dimension for enabling the interpolation filtering mode, or skipping decoding the interpolation filtering mode flag of the current block in a case in which the dimension of the current block does not meet the maximum block dimension and/or the minimum block dimension for enabling the interpolation filtering mode, where the dimension includes at least one of a size (that is, a quantity of included pixels), a width, or a height, and excessive error accumulation may be avoided by setting a condition for a maximum block dimension;

determining whether a difference between a horizontal coordinate of an upper-left corner of the current block and a horizontal coordinate of an upper-left corner of a current picture is greater than or equal to a preset first threshold, and decoding the interpolation filtering mode flag of the current block in a case in which the difference is greater than or equal to the preset first threshold, or skipping decoding the interpolation filtering mode flag of the current block in a case in which the difference is less than the first threshold; or

determining whether a difference between a vertical coordinate of an upper-left corner of the current block and a vertical coordinate of an upper-left corner of a current picture is greater than or equal to a preset second threshold, and decoding the interpolation filtering mode flag of the current block in a case in which the difference is greater than or equal to the preset second threshold, or skipping decoding the interpolation filtering mode flag of the current block in a case in which the difference is less than the second threshold.

In this embodiment, in addition to using higher-level syntax elements to indicate whether the interpolation filtering mode is allowed to be used, use of the interpolation filtering mode may be limited by using block-level syntax elements. These block-level syntax elements may be at a same decoding level as syntax elements related to other block-level intra prediction modes. In VVC, an identifier of a block-level intra prediction mode is parsed at a level of a coding unit (CU). In some cases or in other standards, an identifier of the prediction mode may also be at a level of a prediction unit (PU). The following uses VVC as an example to describe block-level syntax elements related to the interpolation filtering mode at a decoding end (an ellipsis part in the table represents decoding of some other block-level syntax elements, for example, another intra prediction mode).

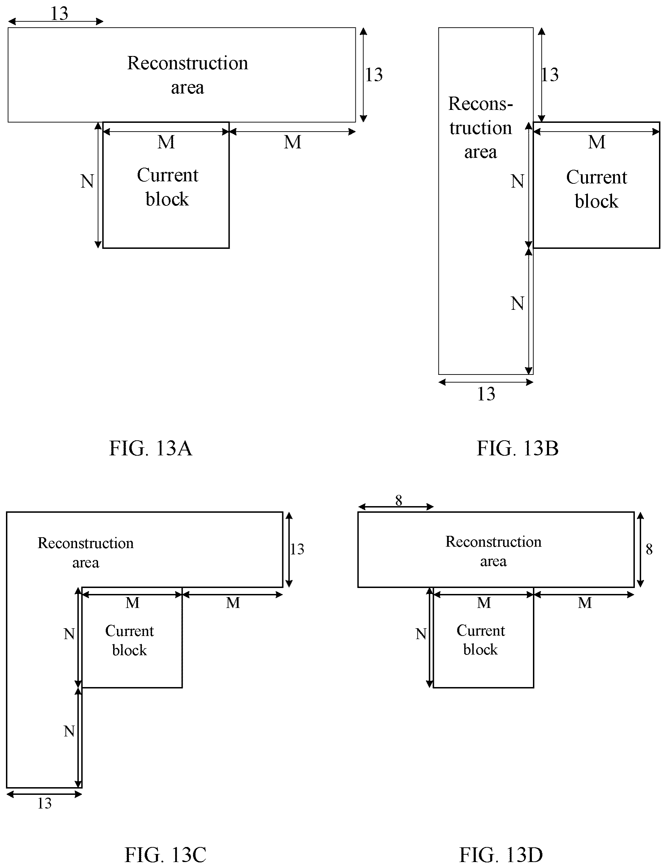

In an example, at an encoding end, a current block has three reconstruction areas that may be used to obtain filtering coefficients. Types and dimensions of the three reconstruction areas are shown in FIG. 13A to FIG. 13C, where M and N in FIG. 13A to FIG. 13C respectively indicate a width of the current block and a height of the current block.

A decoding end parses a block-level syntax element of a current coding unit, as shown in the following table.

| coding_unit( x0, y0, cbWidth, cbHeight, cqtDepth, treeType, modeType ) { | **Descriptor** |
|---|---|
| ... ... | |
| if( CuPredMode[ chType ][ x0 ][ y0 ] = = MODE_INTRA \|\| CuPredMode[ chType ][ x0 ][ y0 ] = = MODE_PLT ) { | |
| if( treeType = = SINGLE_TREE \|\| treeType = = DUAL_TREE_LUMA ) { | |
| ... ... | |
| if( sps_eip_enabled_flag&& cbWidth*cbHeight <=**SIZE_A** && x0>=**XX** && y0>=**YY** ) { | |
| **intra_eip_flag** | ae(v) |
| } | |
| if( intra_eip_flag ){ | |
| **eip_tpl_type_idx**[ x0 ][ y0 ] | ae(v) |
| } | |
| else { | |
| ... ... | |
| } | |
| } | |

(continued)

| | |
|---|---|
| } | |
| } | |

In the foregoing table, eip_tpl_type_idx is a type index of a reconstruction area of the current block, defines a type of the reconstruction area that is selected by the encoding end for the current block and used to obtain the filtering coefficients, and includes two bits. In the table, x0,y0 respectively indicate a horizontal coordinate difference and a vertical coordinate difference between an upper-left corner of the current block (which is the current coding unit in this example) and an upper-left corner of a picture, and XX and YY represent coordinate positions of the upper-left corner of the current block in the picture, which need to be met when the interpolation filtering mode is enabled (that is, allowed to be used). When coordinates of the upper-left corner of the picture are (0,0), XX and YY are respectively the first threshold and the second threshold described above. In the foregoing table, SIZE_A represents a condition for a maximum block dimension that needs to be met for enabling the interpolation filtering mode. In an example, SIZE_A is set to 1024, and XX and YY are set to 13. When there are no sufficient reconstruction rows or reconstruction columns on the left of the current block or above the current block, the condition is not met.

According to the foregoing syntax element, only when the sequence-level flag sps_eip_enabled_flag indicates that the interpolation filtering mode is allowed to be used, a size of the current block (which is the width times the height, that is, cbWidth*cbHeight) is less than or equal to SIZE_A, a horizontal coordinate x0 of the upper-left corner of the current block is greater than or equal to XX, and a vertical coordinate of the upper-left corner of the current block is greater than or equal to YY, the decoding end decodes a block-level interpolation filtering mode flag, that is, intra_eip_flag, and determines, based on intra_eip_flag, whether to perform intra prediction on the current block by using the interpolation filtering mode. In a case in which intra_eip_flag is equal to 1, that is, it indicates that the interpolation filtering mode is used for the current block, the decoding end decodes the type flag eip_tpl_type_idx of the reconstruction area, to determine the type of the reconstruction area selected for the current block. In this example, a quantity of rows of the reconstruction area above the current block and a quantity of columns of the reconstruction area above the current block are both 13, and one filtering window is used. Therefore, a unique reconstruction area and one combination of a filtering window and a reconstruction area may be directly determined based on eip_tpl_type_idx, where eip_tpl_type_idx may also be considered as a reconstruction area index and a sub-mode index.

In this example, a correspondence between eip_tpl_type_idx and the three reconstruction areas shown in FIG. 13A to FIG. 13C is as follows:

| Code word of eip_tpl_type_idx | Reconstruction area corresponding to FIG. 12 |
|---|---|
| 0 | Reconstruction area shown in FIG. 13C |
| 10 | Reconstruction area shown in FIG. 13A |
| 11 | Reconstruction area shown in FIG. 13B |

In another example, at an encoding end, six reconstruction areas are used for a current block. As shown in FIG. 13A to FIG. 13F, on a basis of K = L = 13 in the foregoing example, one upper reconstruction area, one left reconstruction area, and one L-shaped reconstruction area with K = L = 8 are added. In this case, a decoding end parses a block-level syntax element of a current coding unit, as shown in the following table.

| coding_unit( x0, y0, cbWidth, cbHeight, cqtDepth, treeType, modeType ) { | Descriptor |
|---|---|
| ... ... | |
| if( CuPredMode[ chType ][ x0 ][ y0 ] = = MODE_INTRA \| \| CuPredMode[ chType ][ x0 ][ y0 ] = = MODE_PLT ) { | |
| if( treeType = = SINGLE_TREE \| \| treeType = = DUAL_TREE_LUMA ) { | |
| ... ... | |
| if( sps_eip_enabled_flag && cbWidth*cbHeight <=SIZE_A && x0>=XX && y0>=YY) { | |
| **intra_eip_flag** | ae(v) |
| } | |

(continued)

| | |
|---|---|
| if( intra_eip_flag ){ | |
| **eip_tpl_size_idx**[ x0 ][ y0 ] | ae(v) |
| **eip_tpl_type_idx**[ x0 ][ y0 ] | ae(v) |
| } | |
| else { | |
| ... ... | |
| } | |
| } | |
| } | |
| } | |

Meanings of sps_eip_enabled_flag, eip_tpl_type_idx, intra_eip_flag, SIZE_A, XX, and YY in the foregoing table are the same as those in the foregoing example, and are not described again. In this example, XX and YY are set to 13. In a current ECM, a maximum of 13 rows and 13 columns are used for reference in another intra prediction technology. Therefore, for intra prediction based on interpolation filtering, 13 rows and 13 columns are set. When there are no sufficient reconstruction rows and reconstruction columns on the left of the current block or above the current block, the usage condition is not met.

Unlike that in the foregoing example, two parameter indexes of a reconstruction area are used in this example, to represent a selected reconstruction area in the six optional reconstruction areas. In addition to using a type index eip_tpl_type_idx of the reconstruction area to indicate a type of the reconstruction area selected for the current block, a 1-bit dimension index eip_tpl_size_idx of the reconstruction area is also used to indicate a quantity of rows of the selected reconstruction area above the current block and a quantity of columns of the selected reconstruction area on the left of the current block. Because the quantity of rows is equal to the quantity of columns, eip_tpl_size_idx may also be considered as a row quantity index and a column quantity index. If the quantity of rows and the quantity of columns change frequently, a separate row quantity index and a separate column quantity index may alternatively be used.

In this example, if eip_tpl_size_idx is equal to 0, it indicates that the quantity of rows of the used reconstruction area above the current block and the quantity of columns of the used reconstruction area on the left of the current block are both 8. If eip_tpl_size_idx is equal to 1, it indicates that the quantity of rows of the used reconstruction area above the current block and the quantity of columns of the used reconstruction area on the left of the current block are both 13. In this example, eip_tpl_type_idx and eip_tpl_size_idx are used to uniquely identify the reconstruction area selected for the current block. Because there is only one filtering window, a sub-mode of an interpolation filtering mode selected for the current block may alternatively be uniquely identified.

In this example, a correspondence between the reconstruction area and values of eip_tpl_type_idx and eip_tpl_size_idx is shown in the following table.

| Code word of **eip_tpl_size_idx** | Code word of **eip_tpl_type_idx** | Reconstruction area corresponding to FIG. 12 |
|---|---|---|
| 0 | 0 | Reconstruction area shown in FIG. 13F |
| 0 | 10 | Reconstruction area shown in FIG. 13D |
| 0 | 11 | Reconstruction area shown in FIG. 13E |
| 1 | 0 | Reconstruction area shown in FIG. 13C |
| 1 | 10 | Reconstruction area shown in FIG. 13A |
| 1 | 11 | Reconstruction area shown in FIG. 13B |

In this embodiment, whether a decoded binarization identifier is context-based or equiprobable is not limited. However, in some embodiments, a better compression effect may be achieved by changing a binarization manner of a sub-mode or changing a probability model that indicates a binarization identifier of the sub-mode.

In this example, the determining the reconstruction area selected for the current block includes:

decoding a type index of the reconstruction area of the current block, and determining, based on the decoded type index, a type of the reconstruction area selected for the current block, where the type is an upper reconstruction area, a left reconstruction area, or an L-shaped reconstruction area;

decoding a dimension index of the reconstruction area of the current block, and determining, based on the decoded dimension index, a dimension of the reconstruction area selected for the current block, where for example, the quantity of rows of the reconstruction area above the current block and the quantity of columns of the reconstruction area on the left of the current block are set as, for example, K = L = 8 or K = L = 13; and

determining, based on a type and the dimension of the reconstruction area neighboring to the current block and a position and a dimension of the current block, the reconstruction area selected for the current block.

In still another example, at an encoding end, one reconstruction area is used for a current block, for example, the L-shaped reconstruction area shown in FIG. 13C, where K = L = 13. A 4×4 filtering window is used. In this case, a decoding end parses a block-level syntax element of a current coding unit as shown in the following table.

| coding_unit( x0, y0, cbWidth, cbHeight, cqtDepth, treeType, modeType ) { | **Descriptor** |
|---|---|
| ... ... | |
| if( CuPredMode[ chType ][ x0 ][ y0 ] = = MODE_INTRA \|\| CuPredMode[ chType ][ x0 ][ y0 ] = = MODE_PLT ) { | |
| if( treeType = = SINGLE_TREE \|\| treeType = = DUAL_TREE_LUMA ) { | |
| ... ... | |
| if( sps_eip_enabled_flag ) { | |
| **intra_eip_flag** | ae(v) |
| } | |
| if( !intra_eip_flag ){ | |
| ... ... | |
| } | |
| } | |
| } | |
| } | |

In the foregoing table, intra_eip_flag represents an interpolation filtering mode flag at a level of a block (CU). If intra_eip_flag is equal to 1, it indicates that an intra prediction technology in an interpolation filtering mode is used for the current block (CU). If intra_eip_flag is equal to 0, it indicates that the intra prediction technology in the interpolation filtering mode is not used for the current block (CU). When this syntax element does not exist in a current bitstream, a default value is 0, that is, the interpolation filtering mode is not used. In the foregoing table, processing of other syntax elements in the interpolation filtering mode when intra_eip_flag is equal to 1, for example, decoding of related indexes, is omitted. A meaning of sps_eip_enabled_flag is the same as that in the foregoing example.

In this example, the interpolation filtering mode is allowed to be used for blocks of all sizes. If use of intra prediction based on interpolation filtering is restricted by a block size, it should be determined whether a size of the current block met the restriction, or a block-level flag of intra prediction based on interpolation filtering is further decoded.

For example, in another example, when a width of the current block needs to be less than MAX_WIDTH and a height of the current block needs to be less than MAX_HEIGHT, a block-level syntax element is parsed as shown in the following table.

| coding_unit( x0, y0, cbWidth, cbHeight, cqtDepth, treeType, modeType ) { | **Descriptor** |
|---|---|
| ... ... | |
| if( CuPredMode[ chType ][ x0 ][ y0 ] = = MODE_INTRA \|\| CuPredMode[ chType ][ x0 ][ y0 ] = = MODE_PLT ) { | |
| if( treeType = = SINGLE_TREE \|\| treeType = = DUAL_TREE_LUMA ) { | |
| ... ... | |

(continued)

| | |
|---|---|
| if( sps_eip_enabled_flag &&<br>        cbWidth<MAX_WIDTH && cbHeight<MAX_HEIGHT) { | |
| **intra_eip_flag** | ae(v) |
| } | |
| if( !intra_eip_flag ){ | |
| ... ... | |
| } | |
| } | |
| } | |
| } | |

In the foregoing table, cbWidth < MAX_WIDTH and cbHeight < MAX_HEIGHT are two conditions for decoding the interpolation filtering mode flag intra_eip_flag, and another condition is that a sequence-level flag sps_eip_enabled_flag that indicates whether the interpolation filtering mode is allowed to be used is 1. If any of these condition is not met, intra_eip_flag is not decoded.

In another example, the width of the current block needs to be greater than MIN_WIDTH and the height of the current block needs to be greater than MIN_HEIGHT. In this case, a block-level syntax element is parsed as shown in the following table.

| coding_unit( x0, y0, cbWidth, cbHeight, cqtDepth, treeType, modeType ) { | **Descriptor** |
|---|---|
| ... ... | |
| if( CuPredMode[ chType ][ x0 ][ y0 ] = = MODE_INTRA \| \| CuPredMode[ chType ][ x0 ][ y0 ] = = MODE_PLT ) { | |
| if( treeType = = SINGLE_TREE \| \| treeType = = DUAL_TREE_LUMA ) { | |
| ... ... | |
| if( sps_eip_enabled_flag &&<br>        cbWidth>MIN_WIDTH && cbHeight>MIN_HEIGHT) { | |
| **intra_eip_flag** | ae(v) |
| } | |
| if( !intra_eip_flag ){ | |
| ... ... | |
| } | |
| } | |
| } | |
| } | |

In the foregoing table, cbWidth > MIN_WIDTH and cbHeight > MIN_HEIGHT are two conditions for decoding the interpolation filtering mode flag intra_eip_flag, and another condition is that a sequence-level flag sps_eip_enabled_flag that indicates whether the interpolation filtering mode is allowed to be used is 1. If any of these conditions is not met, intra_eip_flag is not decoded.

In another example, if the width of the current block needs to be less than MAX_WIDTH and greater than MIN_WIDTH, and the height of the current block needs to be less than MAX_HEIGHT and greater than MIN_HEIGHT, a block-level syntax element is parsed as shown in the following table.

| coding_unit( x0, y0, cbWidth, cbHeight, cqtDepth, treeType, modeType ) { | **Descriptor** |
|---|---|

(continued)

| ... ... | |
|---|---|
| if( CuPredMode[ chType ][ x0 ][ y0 ] = = MODE_INTRA \|\| CuPredMode[ chType ][ x0 ][ y0 ] = = MODE_PLT ) { | |
| if( treeType = = SINGLE_TREE \|\| treeType = = DUAL_TREE_LUMA ) { | |
| ... ... | |
| if( sps_eip_enabled_flag && <br>       cbWidth<MAX_WIDTH && cbHeight<MAX_HEIGHT && <br>       cbWidth>MIN_WIDTH && cbHeight>MIN_HEIGHT) { | |
| **intra_eip_flag** | ae(v) |
| } | |
| if( !intra_eip_flag ){ | |
| ... ... | |
| } | |
| } | |
| } | |
| } | |

In the foregoing table, MIN_WIDTH < cbWidth, cbWidth < MAX_WIDTH, MIN_HEIGHT < cbHeight, and cbHeight < MAX_HEIGHT are four conditions for decoding the interpolation filtering mode flag intra_eip_flag, and another condition is that a sequence-level flag sps_eip_enabled_flag that indicates whether the interpolation filtering mode is allowed to be used is 1. If any of these conditions is not met, intra_eip_flag is not decoded.

In an example, when performing interpolation filtering on a current block, an encoding end may use a plurality of filtering windows and a plurality of reconstruction areas, and parameters of a filtering window include a quantity of neighboring positions (which may also be referred to as a quantity of coefficients of a filter) and a shape (for example, the three types shown in FIG. 7A to FIG. 7C). In this example, a parameter index of a filtering window and a parameter index of a reconstruction area are used to indicate the selected filtering window and the selected reconstruction area. A block-level syntax element is parsed as shown in the following table.

| coding_unit( x0, y0, cbWidth, cbHeight, cqtDepth, treeType, modeType ) { | **Descriptor** |
|---|---|
| ... ... | |
| if( CuPredMode[ chType ][ x0 ][ y0 ] = = MODE_INTRA \|\| CuPredMode[ chType ][ x0 ][ y0 ] = = MODE_PLT ) { | |
| if( treeType = = SINGLE_TREE \|\| treeType = = DUAL_TREE_LUMA ) { | |
| ... ... | |
| if( sps_eip_enabled_flag ) { As a first intra prediction mode to be encoded and decoded? | |
| **intra_eip_flag** | ae(v) |
| } | |
| if( intra_eip_flag ){ | |
| **eip_shape_idx**[ x0 ][ y0 ] | ae(v) |
| **eip_num_coeff_idx**[ x0 ][ y0 ] | ae(v) |
| **eip_tpl_type_idx**[ x0 ][ y0 ] | ae(v) |
| **eip_tpl_size_idx**[ x0 ][ y0 ] | ae(v) |
| } | |
| else { | |

(continued)

| ... ... | |
|---|---|
| } | |
| } | |
| } | |
| } | |

In the foregoing table, eip_shape_idx is a shape index of the filtering window, and defines an index of a selected filter shape; and eip_num_coeff_idx is an index of a quantity of neighboring positions in the filtering window, and defines a quantity of neighboring positions in the selected filtering window. For example, if eip_num_coeff_idx is equal to 0, it indicates that the quantity of neighboring positions in the filtering window is 15. If eip_num_coeff_idx is equal to 1, it indicates that the quantity of neighboring positions in the filtering window is 24. When a filtering window in a combination corresponding to a sub-mode has only one shape, a shape index of the filtering window may be omitted from a syntax table, which may also be applied to the quantity of neighboring positions in the filtering window.

In the foregoing table, eip_tpl_type_idx is a type index of a reconstruction area, and eip_tpl_size_idx is a dimension index of the reconstruction area. This is the same as that in the foregoing embodiment, and details are not described again.

In another example, one syntax element, for example, a sub-mode index, instead of a plurality of syntax elements, is directly used to indicate the filtering window and the reconstruction area selected for the current block. A block-level syntax element is parsed as shown in the following table.

| coding_unit( x0, y0, cbWidth, cbHeight, cqtDepth, treeType, modeType ) { | **Descriptor** |
|---|---|
| ... ... | |
| if( CuPredMode[ chType ][ x0 ][ y0 ] = = MODE_INTRA \| \| CuPredMode[ chType ][ x0 ][ y0 ] = = MODE_PLT ) { | |
| if( treeType = = SINGLE_TREE \| \| treeType = = DUAL_TREE_LUMA ) { | |
| ... ... | |
| if( sps_eip_enabled_flag ) { | |
| **intra_eip_flag** | ae(v) |
| } | |
| if( intra_eip_flag ){ | |
| **eip_mode_idx**[ x0 ][ y0 ] | ae(v) |
| } | |
| else { | |
| ... ... | |
| } | |
| } | |
| } | |
| } | |

In the foregoing table, eip_mode_idx is a sub-mode index of an interpolation filtering mode selected for the current block. Because one sub-mode index corresponds to one combination of a reconstruction area and a filtering window, a quantity of combinations may be determined based on a type, a quantity of rows, and a quantity of columns of a reconstruction area that can be used, and a shape, a quantity of neighboring positions, and the like of a filtering window. Therefore, the reconstruction area and the filtering window selected for the current block may be determined based on the sub-mode index. Specifically, a combination corresponding to a value of eip_mode_idx may be determined through table lookup or calculation.

In an exemplary embodiment of the present disclosure, the video decoding method further includes: decoding an intra sub partition ISP mode flag, where

in a case in which the ISP mode flag indicates that an ISP mode is used for a current coding unit, the current block on which interpolation filtering is performed is a sub-block obtained by partitioning the current coding unit; or in a case in which the ISP mode flag indicates that an ISP mode is not used for a current coding unit, the current block on which interpolation filtering is performed is the current coding unit.

In this embodiment, the interpolation filtering mode and the intra sub partition (ISP: Intra Sub Partition) technology are used together. When decoding a syntax element of an intra mode, both the interpolation filtering mode and an intra sub partition mode need to be parsed. An example of parsing a block-level intra prediction mode is as follows:

| coding_unit( x0, y0, cbWidth, cbHeight, cqtDepth, treeType, modeType ) { | Descriptor |
|---|---|
| ... ... | |
| if( CuPredMode[ chType ][ x0 ][ y0 ] = = MODE_INTRA \| \| CuPredMode[ chType ][ x0 ][ y0 ] = = MODE_PLT ) { | |
| if( treeType = = SINGLE_TREE \| \| treeType = = DUAL_TREE_LUMA ) { | |
| ... ... | |
| if( sps_eip_enabled_flag ) { | |
| **intra_eip_flag** | ae(v) |
| } | |
| if( intra_eip_flag ){ | |
| ... ... // Decode a sub-mode of interpolation filtering. | |
| if( sps_isp_enabled_flag && intra_luma_ref_idx = = 0 && ( cbWidth <= MaxTbSizeY && cbHeight <= MaxTbSizeY ) && ( cbWidth * cbHeight > MinTbSizeY * MinTbSizeY ) ) | |
| **intra_subpartitions_mode_flag** | ae(v) |
| if( intra_subpartitions_mode_flag = = 1 ) | |
| **intra_subpartitions_split_flag** | ae(v) |
| } | |
| else { | |
| ... ... | |
| } | |
| } | |
| } | |
| } | |

According to the foregoing table, when an ISP mode flag intra_subpartitions_mode_flag and an interpolation filtering mode flag intra_eip_flag are both 1, i.e., being enabled, a current coding unit may be further partitioned into a plurality of sub-blocks because ISP is selected. In this case, intra prediction is performed on each sub-block by using the interpolation filtering mode. During interpolation filtering, the plurality of sub-blocks obtained through the partitioning may share a group of filtering coefficients, or filtering coefficients may be respectively obtained for different sub-blocks.

In an exemplary embodiment of the present disclosure, after the performing the intra prediction on the current block, the video decoding method further includes:

decoding a position-dependent prediction combination (PDPC, Position-dependent prediction combination) mode flag; and
when the PDCP mode flag indicates that a PDCP mode is used for the current block, performing weighting on a predicted block of the current block obtained through interpolation filtering by using reconstructed values of pixels in at least one row and at least one column adjacent to the current block that are not smoothing-filtered.

In this embodiment, a predicted block obtained through interpolation filtering is further optimized by using the PDPC technology. In some embodiments, the PDPC technology may be used by default for all predicted blocks obtained through interpolation filtering. In some embodiments, whether to use the PDPC technology may be determined based on a size and a shape of a block. In some embodiments, a PDPC mode flag eip_pdpc_flag may be obtained through parsing from a bitstream, to determine whether to use the PDPC technology for the current block. An example of parsing a corresponding syntax element is shown in the following table.

| coding_unit( x0, y0, cbWidth, cbHeight, cqtDepth, treeType, modeType ) { | Descriptor |
|---|---|
| ... ... | |
| if( CuPredMode[ chType ][ x0 ][ y0 ] = = MODE_INTRA \|\| CuPredMode[ chType ][ x0 ][ y0 ] = = MODE_PLT ) { | |
| if( treeType = = SINGLE_TREE \|\| treeType = = DUAL_TREE_LUMA ) { | |
| ... ... | |
| if( sps_eip_enabled_flag ) { | |
| **intra_eip_flag** | ae(v) |
| } | |
| if( intra_eip_flag ){ | |
| ... ... // Decode a sub-mode of interpolation filtering. | |
| **eip_pdpc_flag** | ae(v) |
| } | |
| else { | |
| ... ... | |
| } | |
| } | |
| } | |
| } | |

In the foregoing table, if eip_pdpc_flag is equal to 1, it indicates that the PDPC mode (that is, the PCPC technology) is used for the current block. If eip_pdpc_flag is equal to 0, it indicates that the PDPC mode is not used for the current block. When this syntax element does not exist in the bitstream, a default value is 0, that is, the PDPC mode is not used for the current block. In some embodiments, eip_pdpc_flag may be parsed based on conditions such as a size and a shape of a block.

In an exemplary embodiment of the present disclosure, after the performing the intra prediction on the current block, the video decoding method further includes: performing intra prediction on the current block according to one or more intra prediction modes that are different from the interpolation filtering mode, and performing weighting on a predicted block of the current block obtained through prediction based on the one or more intra prediction modes and a predicted block of the current block obtained through prediction based on the interpolation filtering mode, to obtain a final predicted block of the current block. In this embodiment, an interpolation filtering mode may be used with any one or more intra prediction modes, and weighting is performed on a prediction result of interpolation filtering and a prediction result of another prediction mode, to obtain a final prediction signal. A weight used for the weighting may be a fixed weight or a derived weight. When there are a plurality of weight combinations, an index of the weight may be obtained through parsing from a bitstream.

In an exemplary embodiment of the present disclosure, after the performing the intra prediction on the current block, the video decoding method further includes: determining a residual of the current block based on an original value and the predicted value of the current block, and performing transform and inverse transform on the residual, where

when performing the transform and the inverse transform on the residual, a transform kernel used is a transform kernel obtained based on residual sample training in the interpolation filtering mode; or
when performing the transform and the inverse transform on the residual, a quantity of combinations of a primary transform kernel and a secondary transform kernel is limited; or

when performing the transform and the inverse transform on the residual, a quantity of combinations of a primary transform kernel and a secondary transform kernel is limited according to a dimension and/or a shape of the current block; or

when performing the transform and the inverse transform on the residual, a transform kernel used to perform intra prediction based on a planar mode is used.

In this embodiment, during prediction in the interpolation filtering mode, a predicted value of a previous pixel in the current block may be used as an input of interpolation filtering for a next to-be-predicted pixel. Therefore, a prediction error is accumulated, so that residual distribution is different from that of another existing prediction mode. This means that when transform and inverse transform are performed on a residual of the interpolation filtering mode through non-separable primary transform or non-separable secondary transform, a transform kernel used may be a predefined transform kernel that is trained based on an interpolation filtering error. In some embodiments, because residual distribution of the interpolation filtering mode is different from that of another existing prediction mode, a quantity of combinations of a primary transform kernel and a secondary transform kernel of a residual may be limited. For example, only DCT transform is allowed to be used for primary transform. In some embodiments, because residual distribution of the interpolation filtering mode is different from that of another existing prediction mode, a quantity of combinations of a primary transform kernel and a secondary transform kernel of a residual may be limited according to a block parameter (for example, a size or a shape) of the current block.

In an exemplary embodiment of the present disclosure, after the performing the intra prediction on the current block, the video decoding method further includes: determining a residual of the current block based on an original value and the predicted value of the current block, skipping, by using a transform skip mode, transform of the residual, and performing block-based quantization, dequantization, and reconstruction on the current block; or determining a residual of the current block based on an original value and the predicted value of the current block, skipping, by using a transform skip mode, transform of the residual, and performing pixel-by-pixel quantization, dequantization, and reconstruction on the pixels of the current block.

In this embodiment, because residual distribution of the interpolation filtering mode is different from that of another existing prediction mode, the transform skip mode may be used to skip transform of a residual in an interpolation filtering-based prediction mode. When the transform of the residual in the interpolation filtering-based prediction mode is skipped, block-based quantization, dequantization, and reconstruction may be performed on the current block, or pixel-by-pixel quantization, dequantization, and reconstruction may be performed on the pixels of the current block. This may avoid excessive error accumulation that results from using a predicted value of a current position as an input of a filter at a next position.

In an exemplary embodiment of the present disclosure, after the performing the intra prediction on the current block, the video decoding method further includes: when constructing a most probable mode (MPM) list by using the current block as a neighboring block of another coding block, using a planar mode as an intra prediction mode used for the current block.

In an exemplary embodiment of the present disclosure, only when the current block is a luma block, the interpolation filtering mode flag of the current block is allowed to be decoded; or no matter the current block is a luma block or a chroma block, the interpolation filtering mode flag of the current block is allowed to be decoded.

In an exemplary embodiment of the present disclosure, the current block is a luma block; and after the performing the intra prediction on the current block by using the interpolation filtering mode, the method further includes:

when a DM mode is used for a chroma block at a position at which the current block is located, determining that an intra prediction mode used for the chroma block is the planar mode (that is, the planar mode), where in this case, the interpolation filtering mode is not used for the chroma block; or

when a DM mode is used for a chroma block at a position at which the current block is located, determining that an intra prediction mode used for the chroma block is an interpolation filtering mode, where in this case, the interpolation filtering mode is allowed to be used for the chroma block; or

when a DM mode is used for a chroma block at a position at which the current block is located, decoding an interpolation filtering mode flag of the chroma block, and determining, based on a value of the interpolation filtering mode flag, whether an intra prediction mode used for the chroma block is an interpolation filtering mode. In this case, the interpolation filtering mode is allowed to be used for the chroma block, but whether to use the interpolation filtering mode needs to be determined with reference to an interpolation filtering mode flag of the chroma block.

By using intra prediction based on interpolation filtering executed by a decoding end as an example, the following describes specific embodiments of some processing executed in the foregoing embodiment.

**Obtaining a range of a reconstruction area, a maximum value, and a minimum value**

When acquiring filtering coefficients, a dimension index eip_tpl_size_idx of a reconstruction area of a current block is first decoded, to determine a quantity of rows and a quantity of columns of the reconstruction area selected for the current block, which are assumed to be refSize. In addition, the following parameters are obtained according to coordinates puX and puY of a pixel in an upper-left corner of the current block, a width puWidth of the current block, and a height puHeight of the current block:

Width of a reference area: refWidth = puWidth * 2 + refSize
Height of the reference area: refHeight = puHeight * 2 + refSize
Horizontal coordinate of an upper-left corner of the reference area: refPosPicX = puX - refSize
Vertical coordinate of an upper-right corner of the reference area: refPosPicY = puY - refSize

According to coordinates and a size of the reference area, refBuffer of the reference area is obtained from a reconstructed picture buffer, and ref[x][y] indicates a reconstructed pixel value in refBuffer with a distance of (x,y) from the upper-left corner of the reference area. To avoid a division operation during averaging, a reconstructed value of a pixel at an intersection of a first row above the current block and a first column on the left of the current block is used as a mean value.

$$\text{Mean value } mean = \text{ref}[\text{refSize} - 1][\text{refSize} - 1]$$

A process of obtaining a minimum value and a maximum value is shown in the following table.

| min = INT16_max; max = 0; | Set initial values for the maximum value and the minimum value. |
|---|---|
| for(y = 0; y < refHeight; ++y) { | |
| for(x = 0; y < refWidth; ++x) { | |
| if(x>=refSize && y>=refSize) | When x ≥ refSize and y ≥ refSize, this position is not reconstructed, and thus is skipped. |
| Continue | |
| isValid = cs.isDecomp(refPos, chType) && cs.getCURestricted(refPos, cu, chType) != NULL | Determine whether a pixel value of a current position is a reconstructed pixel value. |
| if(isValid) { | |
| max = ref[x][y] > max? ref[x][y] : max | Search for the maximum value. |
| min = ref[x][y] < min? ref[x][y] : min | Search for the minimum value. |
| } | |
| } | |
| } | |

**Solving a filtering coefficient**

A rectangular 4×4 window is used as a filtering window. Obtaining, according to a reconstruction area selected for a current block, a group of filtering coefficients used for interpolation filtering includes the following steps.

Step 1

Buffer a reconstruction sample of a corresponding area by using arrays A[][] and C[], where a first index of the array A represents an index of a sample position, a second index of the array A represents an index (which may be referred to as an input sample index) of a plurality of neighboring positions in the filtering window after the sample position represented by the first index is aligned with a current position of the filtering window, and an index of the array C represents an index (which may also be referred to as an output sample index) of a filtering coefficient outputted by an interpolation filter. A process of obtaining elements in the arrays A and C is as follows:

| | |
|---|---|
| numSamples = 0 | Record a quantity of valid samples. |
| for(y = 3; y < refHeight; ++y) { | |
| for(x = 3; x< refWidth; ++x) { | |
| if(x>=refSize && y>=refSize &&refType==0) | If refType is equal to 0, skip a position that is not in the specified area. |
| continue | |
| if(y>=refSize &&refType==1) | If refType is equal to 1, skip a position that is not in the specified area. |
| continue | |
| if(x>=refSize &&refType==2) | If refType is equal to 2, skip a position that is not in the specified area. |
| continue | |
| | |
| isValid = cs.isDecomp(refPos, chType) && cs.getCURestricted(refPos, cu, chType) != NULL | Determine whether a pixel value of a current position is a recon-structed pixel value. |
| if(isValid){ | |
| A[0][numSamples]=ref[x][y-1]-mean | |
| A[1][numSamples]=ref[x][y-2]-mean | |
| A[2] [numSamples]=reflx] [y-3]-mean | |
| A[3][numSamples]=ref[x-1][y]-mean | |
| A[4][numSamples]=ref[x-1][y-1]-mean | |
| A[5][numSamples]=ref[x-1][y-2]-mean | |
| A[6][numSamples]=ref[x-1][y-3]-mean | |
| A[7][numSamples]=ref[x-2][y]-mean | |
| A[8][numSamples]=ref[x-2][y-1]-mean | |
| A[9] [numSamples]=ref[x-2][y-2]-mean | |
| A[10] [numSamples]=ref[x-2][y-3]-mean | |
| A[11][numSamples]=ref[x-3][y]-mean | |
| A[12][numSamples]=ref[x-3] [y-1]-mean | |
| A[13][numSamples]=ref[x-3] [y-2]-mean | |
| A[14][numSamples]=ref[x-3][y-3]-mean | |
| C[numSamples++]=ref[x][y]-mean | |
| } | |
| } | |
| } | |

In this example, a value of refType is equal to eip_tpl_type_idx, and numSamples indicates a quantity of sample positions in the reconstruction area. In this example, step sizes for moving the filtering window in a width direction and a height direction are both 1. refHeight represents a height of the reconstruction area, and refWidth represents a width of the reconstruction area.

Step 2

Construct an autocorrelation coefficient matrix ATA[][] and a cross-correlation coefficient matrix ATY[] according to the array A[] (note that, as can be found above, coefficients of the autocorrelation coefficient matrix are symmetrical about a diagonal direction, so some calculation may be omitted during the construction). This step is as follows:

| | |
|---|---|
| for ( coli0 = 0; coli0 < 15; coli0++ ) { | |
| for ( colil = coli0; colil < 15; coli1++ ) { | |
| ATA[coli0][coli1] = 0 | |
| for ( rowi = 0; rowi < numSamples; rowi++) { | |
| ATA[coli0][coli1] += A[coli0][rowi] * A[coli1][rowi] | Obtain an autocorrelation coefficient. |
| } | |
| } | |
| } | |
| for ( coli = 0; coli < 15; coli++ ) { | |
| ATY[coli] = 0 | |
| for ( rowi = 0; rowi < numSamples; rowi++ ) { | |
| ATY[coli] += A[coli][rowi]*C[rowi] | Obtain a cross-correlation coefficient. |
| } | |
| } | |
| matrix Shift = 28 - 2 * model.bd - ceilLog2(numSamples); | Obtain a matrix coefficient scaling factor. |
| if(matrixShift > 0){ | |
| for ( coli0 = 0; coli0 < 15; coli0++ ) { | |
| for ( coli1 = coli0; coli1 < 15; coli1++ ) { | |
| ATA[coli0][coli1] <<= matrixShift | Scale down the autocorrelation coefficient. |
| } | |
| } | |
| for ( coli = 0; coli < 15; coli++ ) { | |
| ATY[coli] <<= matrix Shift | Scale down the cross-correlation coefficient. |
| } | |
| } | |
| else if (matrix Shift < 0) { | |
| matrix Shift = -matrixShift | |
| for ( coli0 = 0; coli0 < 15; coli0++ ) { | |
| for ( colil = coli0; colil < 15; coli1++ ) { | |
| ATA[coli0][coli1] >>= matrix Shift | Scale down the autocorrelation coefficient. |
| } | |
| } | |
| for ( coli = 0; coli < 15; coli++ ) { | |
| vATY[coli] >>= matrix Shift | Scale down the cross-correlation coefficient. |
| } | |
| } | |

For solving of a filtering coefficient, in addition to constructing a Wiener filtering equation, another algorithm or method may be used to obtain the filtering coefficient.

Step 3

Decompose the autocorrelation coefficient matrix, and solve an interpolation filtering coefficient through back substitution. This may be implemented through Cholesky decomposition or unit lower triangular matrix (LDL) decomposition.

**Process of prediction based on interpolation filtering**

Inputs of this process include: a buffer piPred of a to-be-predicted block, a width and a height of the predicted block, an interpolation filter coefficient C, which is equal to $\{c_0, ..., c_{14}\}$, a minimum value min, a maximum value max, a mean value mean, a reconstructed pixel buffer refBuffer, and a buffer tempBufff[MAX_CU_SIZE+3][MAX_CU_SIZE+3] used to temporarily store reconstructed pixel values and intermediate values during prediction.
A process of generating a predicted value is as follows:
Step 1: Fill reconstructed pixels in tempBuff, which may be implemented by using the following calculation process:

| | |
|---|---|
| for (y=0; y<height+3; ++y) { | |
|     for (x=0; x<width+3; ++x) { | |
| if(x>=3 && y>=3) | Skip an unreconstructed position. |
| continue | |
| tempBuff[x][y] = ref[x-3][y-3] | Obtain a reconstructed value from a corresponding position in refBuffer, where [0][0] indicates a position in an upper-left corner of a current block. |
|     } | |
| } | |

Step 2: Complete prediction.

| | |
|---|---|
| for **(y=3;** y<height+3; ++y) { | |
|     for **(x=3;** x<width+3; ++x) { | |
| val=$c_0 \times$ (tempBuff[x][y - 1] - mean) | |
| val+=$c_1 \times$ (tempBuff[x][y - 2] - mean) | |
| val+=$c_2 \times$ (tempBuff[x][y - 3] - mean) | |
| val+=$c_3 \times$ (tempBuff[x - 1][y - 0] - mean) | |
| val+=$c_4 \times$ (tempBuff[x - 1][y - 1] - mean) | |
| val+=$c_5 \times$ (tempBuff[x - 1][y - 2] - mean) | |
| val+=$c_6 \times$ (tempBuff[x - 1][y - 3] - mean) | |
| val+=$c_7 \times$ (tempBuff[x - 2][y] - mean) | |
| val+=$c_8 \times$ (tempBuff[x - 2][y - 1] - mean) | |
| val+=$c_9 \times$ (tempBuff[x - 2][y - 2] - mean) | |
| val+=$c_{10} \times$ (tempBuff[x - 2][y - 3] - mean) | |
| val+=$c_{11} \times$ (tempBuff[x - 3][y] - mean) | |
| val+=$c_{12} \times$ (tempBuff[x - 3][y - 1] - mean) | |
| val+=$c_{13} \times$ (tempBuff[x - 3][y - 2] - mean) | |
| val+=$c_{14} \times$ (tempBuff[x - 3][y - 3] - mean) | |
| val=((val+offset)>>shift)+mean | Calculate a predicted value of a position (x,y). |

(continued)

| | |
|---|---|
| val=clip3(min,max,val) | Limit the predicted value within a range. |
| tempBuff[x][y]=val | Temporarily store the predicted value in tempBuff, to facilitate prediction of a next position. |
| piPred[x-3][y-3]=val | Assign the predicted value to a prediction buffer. |
| } | |
| } | |

In the foregoing table, "shift" is a scaling factor for calculating a filter coefficient, and "offset" is an offset value. (The scaling factor is used to ensure a larger dynamic range of an interpolation filtering coefficient. Therefore, scaling is performed during obtaining of the coefficient.)

Based on the VVC test software VTM-10.0 reference software, the ECM (enhanced compression model) integrates various new tools to further explore encoding and decoding performance. Based on the intra prediction method described in embodiments of the present disclosure, performance of using the six reference areas shown in FIG. 13A to FIG. 13F and the 4×4 filtering window on ECM-6.0 reference software is as follows:

| | All Intra Main 10 | | | | |
|---|---|---|---|---|---|
| | Over 20220905-ECM6.0 | | | | |
| | Y | U | V | EncT | DecT |
| Class A1 | -0.09% | -0.18% | -0.08% | 108% | 92% |
| Class A2 | -0.13% | -0.10% | -0.10% | 107% | 94% |
| Class B | -0.13% | -0.03% | -0.06% | 111% | 96% |
| Class C | -0.11% | -0.13% | -0.24% | 110% | 95% |
| Class E | -0.30% | -0.27% | -0.30% | 111% | 91% |
| **Overall** | **-0.15%** | **-0.13%** | **-0.15%** | **110%** | **94%** |
| Class D | -0.01% | 0.02% | -0.07% | 109% | 84% |
| Class F | -0.13% | 0.01% | -0.07% | 100% | 97% |
| Class TGM | #VALUE! | #VALUE! | #VALUE! | #VALUE! | #VALUE! |

Meanings of the parameters in the tables are as follows:

EncT: Encoding Time, encoding time. 10X% represents that after a reference row sorting technology is integrated, an encoding time is 10X% compared with that before the integration, which means that there is an X% increase in the encoding time.

DecT: Decoding Time, decoding time. 10X% represents that after a reference row sorting technology is integrated, a decoding time is 10X% compared with that before the integration, which means that there is an X% increase in the decoding time.

ClassA1 and Class A2 are test video sequences with a resolution of 3840 x 2160, ClassB is a test sequence with a resolution of 1920 x 1080, ClassC is 832 x 480, ClassD is 416 x 240, and ClassE is 1280 x 720; and ClassF is several screen content sequences (Screen content) with different resolutions.

Y, U, and V are three components of a color. Columns in which Y, U, and V are located indicate BD-rate (Bjøntegaard-Delta rate) indexes of a test result on Y, U, and V. A smaller value indicates better encoding performance.

All intra indicates a test configuration for an all intra configuration.

Performing intra prediction encoding and decoding by using the interpolation filtering mode according to embodiments of the present disclosure improves an objective compression effect by 0.15%, 0.13%, and 0.15% respectively for the Y, U, and V components under a common test condition.

An embodiment of the present disclosure further provides a bitstream, where the bitstream is generated by using the video encoding method according to any one of embodiments of the present disclosure.

An embodiment of the present disclosure further provides an intra prediction apparatus based on interpolation filtering. As shown in FIG. 15, the apparatus includes a processor 71 and a memory 73 that stores a computer program, where when executing the computer program, the processor 71 is capable of implementing the intra prediction method based on interpolation filtering according to any one of embodiments of the present disclosure.

An embodiment of the present disclosure further provides a video decoding apparatus. Referring to FIG. 15, the apparatus includes a processor and a memory that stores a computer program, where when executing the computer program, the processor is capable of implementing the video decoding method according to any one of embodiments of the present disclosure.

An embodiment of the present disclosure further provides a video encoding apparatus. Referring to FIG. 15, the apparatus includes a processor and a memory that stores a computer program, where when executing the computer program, the processor is capable of implementing the video encoding method according to any one of embodiments of the present disclosure.

The processor in the foregoing embodiments of the present disclosure may be a general-purpose processor, including a central processing unit (CPU), a network processor (Network Processor, NP for short), a microprocessor, or another conventional processor. The processor may alternatively be a digital signal processor (DSP), an application-specific integrated circuit (ASIC), a field-programmable gate array (FPGA), a discrete logic or another programmable logic device, a discrete gate or transistor logic device, a discrete hardware component, another equivalent integrated or discrete logic circuit, or a combination of the foregoing components. In other words, the processor in the foregoing embodiment may be any processing device or a combination of devices that implement the methods, steps, and logic diagrams disclosed in embodiments of the present invention. If embodiments of the present disclosure are partially implemented in software, instructions for the software may be stored in a suitable non-volatile computer-readable storage medium, and the instructions may be executed in hardware by one or more processors to implement a method in embodiments of the present disclosure. The term "processor" used herein may refer to the structure described above or any other structure suitable for implementing the techniques described herein.

An embodiment of the present disclosure further provides a video encoding and decoding system, including the video encoding apparatus according to any one of embodiments of the present disclosure and the video decoding apparatus according to any one of embodiments of the present disclosure.

An embodiment of the present disclosure further provides a non-transitory computer-readable storage medium. The computer-readable storage medium stores a computer program, and when being executed by a processor, the computer program is capable of implementing the intra prediction method based on interpolation filtering according to any one of embodiments of the present disclosure, or the video decoding method according to any one of embodiments of the present disclosure, or the video encoding method according to any one of embodiments of the present disclosure.

An embodiment of the present disclosure further provides a computer program product, including a computer program, where when being executed by a processor, the computer program is capable of implementing the intra prediction method based on interpolation filtering according to any one of embodiments of the present disclosure, the video decoding method according to any one of embodiments of the present disclosure, or the video encoding method according to any one of embodiments of the present disclosure.

In one or more exemplary embodiments above, the functions described may be implemented in hardware, software, firmware, or any combination thereof. If embodiments are implemented in software, functionality may be stored as one or more instructions or code on a computer-readable medium or transmitted via a computer-readable medium and executed by a hardware-based processing unit. The computer-readable medium may include a computer-readable storage medium corresponding to a tangible medium, such as a data storage medium, or a communications medium that facilitates transfer of a computer program, for example, from one location to another according to a communication protocol. In this way, the computer-readable medium may generally correspond to a non-transitory tangible computer-readable storage medium or a communications medium such as a signal or a carrier. The data storage medium may be any available medium that may be accessed by one or more computers or one or more processors to retrieve instructions, code, and/or data structures for implementing the techniques described in embodiments of the present disclosure. A computer program product may include a computer-readable medium.

By way of example instead of limitation, such a computer-readable storage medium may include a RAM, a ROM, an EEPROM, a CD-ROM, or other optical disk storage apparatuses, magnetic disk storage apparatuses, or other magnetic storage apparatuses, a flash memory, or any other medium that can be used to store desired program code in the form of instructions or data structures and that can be accessed by a computer. In addition, any connection may be referred to as a computer-readable medium. For example, if instructions are transmitted from a website, a server, or other remote sources using a coaxial cable, a fiber optic cable, a twisted pair, a digital subscriber line (DSL), or wireless technologies such as infrared rays, radio, and microwaves, the coaxial cable, the fiber optic cable, the twisted pair, the DSL, or the wireless technologies such as infrared rays, radio, and microwaves are included in the definition of the medium. However, it should be understood that the computer-readable storage medium and the data storage medium do not include connections, carriers, signals, or other temporary (transient) media, but refer specifically to non-transitory tangible storage media. As used herein, disks and optical discs include compact discs (CD), laser discs, optical discs, digital versatile discs (DVD), floppy disks, Blu-ray discs, and the like. In these cases, disks generally regenerate data magnetically, while optical discs regenerate data optically using lasers. A combination of the above should also be included within the range of the computer-readable medium.

In some aspects, the functionality described herein may be provided within dedicated hardware and/or software modules configured for encoding and decoding, or integrated into a combined codec. Furthermore, the techniques may be fully implemented in one or more circuits or logic elements.

The technical solutions of embodiments of the present disclosure may be implemented in a wide range of apparatuses or devices, including mobile phones, integrated circuits (ICs), or a set of ICs (for example, a chipset). Various components, modules, or units are described in embodiments of the present disclosure to emphasize functional aspects of apparatuses configured to execute the described techniques, but they are not necessarily implemented through different hardware units. Instead, as described above, the various units can be combined within codec hardware units or provided by a collection of interoperating hardware units (including one or more processors as mentioned above) along with appropriate software and/or firmware.

**Claims**

1.   An intra prediction method based on interpolation filtering, comprising:

> determining, based on a filtering window of a current block and a reconstructed value of a pixel in a reconstruction area neighboring to the current block, a filtering coefficient used to perform interpolation filtering on the current block; and
> performing pixel-by-pixel prediction on pixels in the current block according to the filtering window and the filtering coefficient, to obtain a predicted block of the current block,
> wherein when performing prediction on a current pixel, reference pixels neighboring to the current pixel are determined based on the filtering window, and interpolation filtering is performed based on pixel values of the reference pixels and the filtering coefficient, to obtain a predicted value of the current pixel.

2.   The intra prediction method according to claim 1, wherein

> the reference pixels comprise at least one of following: a reconstructed pixel in the reconstruction area neighboring to the current block, or a predicted pixel in the current block; and
> in a case in which the reference pixels are all reconstructed pixels, the pixel values of the reference pixels refer to reconstructed values of the reference pixels; or
> in a case in which the reference pixels are all predicted pixels, the pixel values of the reference pixels refer to predicted values of the reference pixels; or
> in a case in which the reference pixels comprise a reconstructed pixel and a predicted pixel, the pixel values of the reference pixels comprise a reconstructed value of the reconstructed pixel in the reference pixels and a predicted value of the predicted pixel in the reference pixels.

3.   The intra prediction method according to claim 1, wherein
the filtering window of the current block is determined based on a block parameter of the current block, and the block parameter comprises at least one of a shape, a dimension, or a position.

4.   The intra prediction method according to claim 1, wherein

> the filtering window of the current block comprises one or more filtering windows, and the reconstruction area neighboring to the current block comprises one or more reconstruction areas;
> the determining, based on the filtering window of the current block and the reconstructed value of the pixel in the reconstruction area neighboring to the current block, the filtering coefficient used to perform interpolation filtering on the current block comprises: for each combination of a filtering window of the current block and a reconstruction area neighboring to the current block, determining a group of filtering coefficients corresponding to the combination based on the filtering window in the combination and a reconstructed value of a pixel in the reconstruction area in the combination; and
> the performing the pixel-by-pixel prediction on the pixels in the current block according to the filtering window and the filtering coefficient, to obtain the predicted block of the current block comprises: for each combination of a filtering window of the current block and a reconstruction area neighboring to the current block, performing the pixel-by-pixel prediction on the pixels in the current block according to the filtering window in the combination and the group of filtering coefficients corresponding to the combination, to obtain one predicted block of the current block.

**5.** The intra prediction method according to claim 4, wherein

for each of the filtering windows of the current block, the filtering window comprises one current position and a plurality of neighboring positions, and the group of filtering coefficients corresponding to the combination comprising the filtering window comprises a plurality of filtering coefficients that are in a one-to-one correspondence with the plurality of neighboring positions; and
the performing the pixel-by-pixel prediction on the pixels in the current block according to the filtering window in the combination and the group of filtering coefficients corresponding to the combination comprises: aligning the current pixel with the current position of the filtering window in the combination, determining pixels at all neighboring positions of the filtering window in the combination as the reference pixels neighboring to the current pixel, and performing interpolation filtering based on the pixel values of the reference pixels and the group of filtering coefficients corresponding to the combination, to obtain the predicted value of the current pixel.

**6.** The intra prediction method according to claim 5, wherein
the determining the group of filtering coefficients corresponding to the combination based on the filtering window in the combination and the reconstructed value of the pixel in the reconstruction area in the combination comprises:

placing the filtering window in the combination at M different positions that have reconstructed pixels in the reconstruction area in the combination, wherein $M \geq 1$;
constructing a Wiener-Hopf equation by using M current positions in the filtering window at the M different positions as sample positions and using reconstructed values or mean-removed reconstructed values of pixels at all neighboring positions in the filtering window at the M different positions as inputs; and
solving the Wiener-Hopf equation with an objective of minimizing errors between predicted values and reconstructed values of the M current positions, to obtain the group of filtering coefficients corresponding to the combination.

**7.** The intra prediction method according to claim 6, wherein
integer-only computation is used to solve the Wiener-Hopf equation, and an autocorrelation coefficient matrix of the Wiener-Hopf equation is decomposed through Cholesky decomposition or a unit lower triangular matrix LDL decomposition.

**8.** The intra prediction method according to claim 6, wherein
the performing the interpolation filtering based on the pixel values of the reference pixels and the group of filtering coefficients corresponding to the combination, to obtain the predicted value of the current pixel comprises:

calculating the predicted value *pred* of the current pixel according to following formula:

$$pred = \sum_{n=0}^{N-1}(t_{p_n} \times c_n),$$

or calculating the predicted value *pred* of the current pixel according to following formula:

$$pred = ((\sum_{n=0}^{N-1}(t_{p_n} \times c_n)) + offset) \gg shift,$$

wherein $t_{p_n}$ is a pixel value of an $n^{th}$ reference pixel of the current pixel, $n = 0,1,...,N\text{-}1$, $c_n$ is a filtering coefficient that corresponds to the $n^{th}$ reference pixel in the group of filtering coefficients, $N$ is a quantity of the reference pixels, *offset* and *shift* are predefined values, and ">>" indicates a right shift operation on a binary number.

**9.** The intra prediction method according to claim 6, wherein
the performing the interpolation filtering based on the pixel values of the reference pixels and the group of filtering coefficients corresponding to the combination, to obtain the predicted value of the current pixel comprises:

in a case in which the group of filtering coefficients is obtained by solving a Wiener-Hopf equation that uses mean-removed reconstructed values as inputs, calculating the predicted value *pred* of the current pixel according to following formula:

$$pred = \sum_{n=0}^{N-1}((t_{p_n} - m) \times c_n) + m,$$

or calculating the predicted value *pred* of the current pixel according to following formula:

$$pred = (((\sum_{n=0}^{N-1}((t_{p_n} - m) \times c_n)) + offset) \gg shift) + m,$$

wherein $t_{p_n}$ is a pixel value of an $n^{th}$ reference pixel of the current pixel, $n = 0, 1, ..., N-1$, $c_n$ is a filtering coefficient that corresponds to the $n^{th}$ reference pixel in the group of filtering coefficients, $N$ is a quantity of the reference pixels, $m$ is a mean value used to calculate the mean-removed reconstructed values, *offset* and *shift* are predefined values, and ">>" indicates a right shift operation on a binary number.

10. The intra prediction method according to claim 6, wherein
the mean-removed reconstructed values are obtained by subtracting a mean value from the reconstructed values, and the mean value is obtained in following manner:

averaging reconstructed values of all pixels in the reconstruction area in the combination, to obtain the mean value; or
averaging reconstructed values of some pixels in the reconstruction area in the combination, to obtain the mean value; or
using a reconstructed value of one specified pixel in the reconstruction area in the combination as the mean value.

11. The intra prediction method according to claim 10, wherein

in the averaging the reconstructed value of the some pixels in the reconstruction area in the combination, the some pixels comprise pixels in one or more adjacent rows above the current block, and/or pixels in one or more adjacent columns on the left of the current block;
the using the reconstructed value of the one specified pixel in the reconstruction area in the combination as the mean value is: using a reconstructed value of one pixel that is in the reconstruction area and is adjacent to an upper-left corner of the current block as the mean value.

12. The intra prediction method according to claim 1, wherein
the reconstruction area neighboring to the current block comprises one or more of following areas adjacent to the current block:

an upper reconstruction area above the current block, wherein each upper reconstruction area comprises one area or two consecutive areas or three consecutive areas among an area on the upper-left of the current block, an area directly above the current block, and an area on the upper-right of the current block;
a left reconstruction area on the left of the current block, wherein each left reconstruction area comprises one area or two consecutive areas or three consecutive areas among an area on the upper-left of the current block, an area directly on the left of the current block, and an area on the lower-left of the current block; or
an L-shaped reconstruction area above and on the left of the current block, wherein each L-shaped reconstruction area comprises an area directly above the current block, an area on the upper-left of the current block, and an area directly on the left of the current block, or comprises one or two of an area directly above the current block, an area on the upper-left of the current block, an area directly on the left of the current block, an area on the upper-right of the current block, or an area on the lower-left of the current block.

13. The intra prediction method according to claim 1, wherein

a dimension of the reconstruction area neighboring to the current block is determined based on a dimension of the current block;
in the reconstruction area neighboring to the current block, a quantity of rows above the current block and a quantity of columns on the left of the current block are determined based on a width of the current block and/or a height of the current block; and
the reconstruction area neighboring to the current block comprises only one reconstruction area; or, the reconstruction area neighboring to the current block comprises a plurality of reconstruction areas, and the reconstruction areas are different from each other in at least one of type, width, height, or position.

14. The intra prediction method according to claim 5, wherein

the plurality of neighboring positions in the filtering window are located directly above the current position, on the upper-left of the current position, and on the left of the current position; or

the plurality of neighboring positions in the filtering window are located directly above the current position, on the upper-left of the current position, on the left of the current position, and on the upper-right of the current position; or

the plurality of neighboring positions in the filtering window are located directly above the current position, on the upper-left of the current position, on the left of the current position, and on the lower-left of the current position.

15. The intra prediction method according to claim 14, wherein

in a case in which the plurality of neighboring positions in the filtering window are located directly above the current position, on the upper-left of the current position, and on the left of the current position, the performing the pixel-by-pixel prediction on the pixels in the current block comprises: performing, in the current block, the pixel-by-pixel prediction in a sequence from left to right and then from top to bottom, or in a sequence from top to bottom and then from left to right, or in a sequence in a diagonal direction, or in a Zig-Zag sequence; or

in a case in which the plurality of neighboring positions in the filtering window are located directly above the current position, on the upper-left of the current position, on the left of the current position, and on the lower-left of the current position, the performing the pixel-by-pixel prediction on the pixels in the current block comprises: performing, in the current block, the pixel-by-pixel prediction in a sequence from top to bottom and then from left to right; or

in a case in which the plurality of neighboring positions in the filtering window are located directly above the current position, on the upper-left of the current position, on the left of the current position, and on the upper-right of the current position, the performing the pixel-by-pixel prediction on the pixels in the current block comprises: performing, in the current block, the pixel-by-pixel prediction in a sequence from left to right and then from top to bottom.

16. The intra prediction method according to claim 1, wherein
the filtering window is rectangular or L-shaped, and comprises one current position corresponding to the current pixel and at least two neighboring positions corresponding to the reference pixels.

17. The intra prediction method according to claim 1, wherein
performing the interpolation filtering based on the pixel values of the reference pixels and the filtering coefficient, to obtain the predicted value of the current pixel comprises:

performing the interpolation filtering based on the pixel values of the reference pixels and the filtering coefficient, to obtain an initial predicted value;
when the initial predicted value exceeds a predicted value range of the current block, correcting the initial predicted value, so that the corrected predicted value falls within the predicted value range of the current block; and
using the corrected predicted value as the predicted value of the current pixel.

18. The intra prediction method according to claim 17, wherein
the correcting the initial predicted value comprises: when the initial predicted value is greater than a maximum value of the predicted value range, using the maximum value as the corrected predicted value; or when the initial predicted value is less than a minimum value of the predicted value range, using the minimum value as the corrected predicted value, wherein the predicted value range is determined based on a data depth of the predicted value, or is determined based on a maximum reconstructed value and a minimum reconstructed value of pixels in entire or a part of a reconstruction area used to determine the filtering coefficient.

19. A video decoding method, comprising:

decoding an interpolation filtering mode flag of a current block;
in a case in which it is determined, based on the decoded interpolation filtering mode flag, to perform intra prediction on the current block by using an interpolation filtering mode, determining a filtering window selected for the current block and a reconstruction area selected for the current block; and
performing intra prediction on the current block based on the determined filtering window and the determined reconstruction area by using the intra prediction method based on interpolation filtering according to any one of claims 1 to 18.

**20.** The video decoding method according to claim 19, wherein
the determining the filtering window selected for the current block comprises:

determining a preset filtering window as the filtering window selected for the current block; or
determining a filtering window corresponding to a block parameter of the current block as the filtering window selected for the current block, wherein the block parameter comprises at least one of a position, a shape, or a dimension; or
decoding a sub-mode index of the current block, and determining, based on the sub-mode index, the filtering window selected for the current block, wherein each sub-mode index corresponds to one combination of a filtering window of the current block and a reconstruction area neighboring to the current block; or
decoding a filtering window index of the current block, and determining, based on the filtering window index, the filtering window selected for the current block, wherein each filtering window index corresponds to one filtering window; or
decoding a parameter index of the filtering window of the current block, determining a parameter of the filtering window based on the parameter index of the filtering window, and determining, based on the parameter, the filtering window selected for the current block, wherein the parameter of the filtering window comprises at least one of a shape, a dimension, or a quantity of neighboring positions.

**21.** The video decoding method according to claim 19, wherein
the determining the reconstruction area selected for the current block comprises:

determining, based on a preset parameter of the reconstruction area, the reconstruction area selected for the current block; or
determining a reconstruction area corresponding to a block parameter of the current block as the reconstruction area selected for the current block, wherein the block parameter comprises at least one of a position, a shape, or a dimension; or
decoding a sub-mode index of the current block, and determining, based on the sub-mode index, the reconstruction area selected for the current block, wherein each sub-mode index corresponds to one combination of a filtering window of the current block and a reconstruction area neighboring to the current block; or
decoding a reconstruction area index of the current block, and determining, based on the reconstruction area index, the reconstruction area selected for the current block, wherein each reconstruction area index corresponds to one reconstruction area; or
decoding a parameter index of the reconstruction area of the current block, determining a parameter of the reconstruction area based on the parameter index of the reconstruction area, and determining, based on the parameter, the reconstruction area selected for the current block.

**22.** The video decoding method according to claim 21, wherein
the parameter index of the reconstruction area comprises at least one of following:

a type index of the reconstruction area; or
a dimension index of the reconstruction area, wherein the dimension of the reconstruction area comprises at least one of a quantity of rows of the reconstruction area above the current block or a quantity of columns of the reconstruction area on the left of the current block.

**23.** The video decoding method according to claim 19, wherein
the determining the neighboring reconstruction area selected for the current block comprises:

decoding a type index of the reconstruction area of the current block, and determining, based on the decoded type index, a type of the reconstruction area selected for the current block, wherein the type is an upper reconstruction area, a left reconstruction area, or an L-shaped reconstruction area;
decoding a dimension index of the reconstruction area of the current block, and determining, based on the decoded dimension index, a dimension of the reconstruction area selected for the current block; and
determining the reconstruction area selected for the current block based on a type, a quantity of rows, and a quantity of columns of the reconstruction area neighboring to the current block and a position and a dimension of the current block.

**24.** The video decoding method according to claim 21, wherein

only when the current block is a luma block, the interpolation filtering mode flag of the current block is allowed to be decoded; or

when the current block is a luma block or a chroma block, the interpolation filtering mode flag of the current block is allowed to be decoded.

25. The video decoding method according to claim 21, wherein
before the decoding the interpolation filtering mode flag of the current block, the method further comprises any one or more of following processing:

decoding a sequence-level flag that indicates whether an interpolation filtering mode is allowed to be used, and decoding the interpolation filtering mode flag of the current block in a case in which a value of the sequence-level flag indicates that the interpolation filtering mode is allowed to be used, or skipping decoding the interpolation filtering mode flag of the current block in a case in which a value of the sequence-level flag indicates that the interpolation filtering mode is not allowed to be used;

decoding a picture-level flag that indicates whether an interpolation filtering mode is allowed to be used, and decoding the interpolation filtering mode flag of the current block in a case in which a value of the picture-level flag indicates that the interpolation filtering mode is allowed to be used, or skipping decoding the interpolation filtering mode flag of the current block in a case in which a value of the picture-level flag indicates that the interpolation filtering mode is not allowed to be used;

decoding a slice-level flag that indicates whether an interpolation filtering mode is allowed to be used, and decoding the interpolation filtering mode flag of the current block in a case in which a value of the slice-level flag indicates that the interpolation filtering mode flag of the current block is allowed to be used, or skipping decoding the interpolation filtering mode flag of the current block in a case in which a value of the slice-level flag indicates that the interpolation filtering mode is not allowed to be used; or

decoding a general constraints information GCI identifier that indicates whether an interpolation filtering mode is forbidden to be used, and decoding, in a case in which a value of the GCI identifier indicates that the interpolation filtering mode is not forbidden to be used, a sequence-level flag that indicates whether the interpolation filtering mode is allowed to be used, or skipping decoding, in a case in which a value of the GCI identifier indicates that the interpolation filtering mode is forbidden to be used, a sequence-level flag that indicates whether the interpolation filtering mode is allowed to be used, wherein the sequence-level flag indicates by default that the interpolation filtering mode is not allowed to be used.

26. The video decoding method according to claim 19, wherein
the current block is a luma block; and after the performing the intra prediction on the current block, the method further comprises:

when a DM mode is used for a chroma block at a position at which the current block is located, determining that an intra prediction mode used for the chroma block is a planar mode; or
when a DM mode is used for a chroma block at a position at which the current block is located, determining that an intra prediction mode used for the chroma block is an interpolation filtering mode; or
when a DM mode is used for a chroma block at a position at which the current block is located, decoding an interpolation filtering mode flag of the chroma block, and determining, based on a value of the interpolation filtering mode flag, whether an intra prediction mode used for the chroma block is an interpolation filtering mode.

27. The video decoding method according to claim 19, wherein
before the decoding the interpolation filtering mode flag of the current block, the method further comprises any one or more of following processing:

determining whether a dimension of the current block meets a maximum block dimension and/or a minimum block dimension for enabling the interpolation filtering mode, and decoding the interpolation filtering mode flag of the current block in a case in which the dimension of the current block meets the maximum block dimension and/or the minimum block dimension for enabling the interpolation filtering mode, or skipping decoding the interpolation filtering mode flag of the current block in a case in which the dimension of the current block does not meet the maximum block dimension and/or the minimum block dimension for enabling the interpolation filtering mode, wherein the dimension comprises at least one of a size, a width, or a height;
determining whether a difference between a horizontal coordinate of an upper-left corner of the current block and a horizontal coordinate of an upper-left corner of a current picture is greater than or equal to a preset first threshold, and decoding the interpolation filtering mode flag of the current block in a case in which the difference is greater than or equal to the preset first threshold, or skipping decoding the interpolation filtering mode flag of the current block in a case in which the difference is less than the first threshold; or

determining whether a difference between a vertical coordinate of an upper-left corner of the current block and a vertical coordinate of an upper-left corner of a current picture is greater than or equal to a preset second threshold, and decoding the interpolation filtering mode flag of the current block in a case in which the difference is greater than or equal to the preset second threshold, or skipping decoding the interpolation filtering mode flag of the current block in a case in which the difference is less than the second threshold.

28. The video decoding method according to claim 19, wherein

the method further comprises: decoding an intra sub partition ISP mode flag, wherein
in a case in which the ISP mode flag indicates that an ISP mode is used for a current coding unit, the current block on which interpolation filtering is performed is a sub-block obtained by partitioning the current coding unit; or
in a case in which the ISP mode flag indicates that an ISP mode is not used for a current coding unit, the current block on which interpolation filtering is performed is the current coding unit.

29. The video decoding method according to claim 19, wherein
after the performing the intra prediction on the current block, the method further comprises:
decoding a position-dependent prediction combination PDCP mode flag; and when the PDCP mode flag indicates that a PDCP mode is used for the current block, performing weighting on a predicted block of the current block obtained through interpolation filtering by using reconstructed values of pixels in at least one row and at least one column adjacent to the current block that are not smoothing-filtered.

30. The video decoding method according to claim 19, wherein
after the performing the intra prediction on the current block, the method further comprises:
performing intra prediction on the current block according to one or more intra prediction modes that are different from the interpolation filtering mode, and performing weighting on a predicted block of the current block obtained through prediction based on the one or more intra prediction modes and a predicted block of the current block obtained through prediction based on the interpolation filtering mode, to obtain a final predicted block of the current block.

31. The video decoding method according to claim 19, wherein

after the performing the intra prediction on the current block, the method further comprises: determining a residual of the current block based on an original value and the predicted value of the current block, and performing transform and inverse transform on the residual, wherein
when performing the transform and the inverse transform on the residual, a transform kernel used is a transform kernel obtained based on residual sample training in the interpolation filtering mode; or
when performing the transform and the inverse transform on the residual, a quantity of combinations of a primary transform kernel and a secondary transform kernel is limited; or
when performing the transform and the inverse transform on the residual, a quantity of combinations of a primary transform kernel and a secondary transform kernel is limited according to a dimension and/or a shape of the current block; or
when performing the transform and the inverse transform on the residual, a transform kernel used to perform intra prediction based on a planar mode is used.

32. The video decoding method according to claim 19, wherein
after the performing the intra prediction on the current block, the method further comprises:

determining a residual of the current block based on an original value and the predicted value of the current block, skipping, by using a transform skip mode, transform of the residual, and performing block-based quantization, dequantization, and reconstruction on the current block; or
determining a residual of the current block based on an original value and the predicted value of the current block, skipping, by using a transform skip mode, transform of the residual, and performing pixel-by-pixel quantization, dequantization, and reconstruction on the pixels of the current block.

33. The video decoding method according to claim 19, wherein
after the performing the intra prediction on the current block, the method further comprises:
when constructing a most probable mode list by using the current block as a neighboring block of another coding block, using a planar mode as an intra prediction mode used for the current block.

34. A video encoding method, comprising:

performing intra prediction on a current block based on a plurality of intra prediction modes, wherein if determining that an interpolation filtering mode is allowed to be used for the current block, intra prediction in the interpolation filtering mode is performed on the current block by using the intra prediction method according to any one of claims 1 to 18; and
if determining, based on rate distortion costs of the plurality of intra prediction modes, to perform intra prediction on the current block by using the interpolation filtering mode, encoding an interpolation filtering mode flag of the current block, to indicate performing intra prediction on the current block by using the interpolation filtering mode.

35. The video encoding method according to claim 34, wherein
the determining that the interpolation filtering mode is allowed to be used for the current block comprises: determining that the interpolation filtering mode is allowed to be used for the current block when none of conditions for forbidding use of the interpolation filtering mode is met, wherein the conditions for forbidding use of the interpolation filtering mode comprise any one or more of following conditions:

the current block is a chroma block;
a sequence-level flag indicates that the interpolation filtering mode is not allowed to be used;
a picture-level flag indicates that the interpolation filtering mode is not allowed to be used;
a slice-level flag indicates that the interpolation filtering mode is not allowed to be used;
a GCI identifier indicates that the interpolation filtering mode is forbidden to be used;
a dimension of the current block does not meet a maximum block dimension and/or a minimum block dimension for enabling the interpolation filtering mode;
a difference between a horizontal coordinate of an upper-left corner of the current block and a horizontal coordinate of an upper-left corner of a current picture is less than a preset first threshold; or
a difference between a vertical coordinate of an upper-left corner of the current block and a vertical coordinate of an upper-left corner of a current picture is less than a preset second threshold.

36. The video encoding method according to claim 34, wherein

performing the intra prediction in the interpolation filtering mode on the current block comprises: determining a combination of a filtering window of the current block and a reconstruction area neighboring to the current block that is used to perform intra prediction in the interpolation filtering mode on the current block, wherein K combinations correspond to K sub-modes of the interpolation filtering mode, and for each of the sub-modes, performing, based on the filtering window of the current block and the reconstruction area neighboring to the current block that are in a combination corresponding to the respective sub-mode, the intra prediction based on interpolation filtering on the current block, wherein K is a quantity of combinations, and K ≥ 2;
the determining, based on the rate distortion costs of the plurality of intra prediction modes, to perform the intra prediction on the current block by using the interpolation filtering mode comprises: using a smallest value in rate distortion costs of the K sub-modes as a rate distortion cost of the interpolation filtering mode, and comparing the rate distortion cost of the interpolation filtering mode with a rate distortion cost of another intra prediction mode in the plurality of intra prediction modes; and
when the rate distortion cost of the interpolation filtering mode is smallest, the method further comprises: encoding index information that is used to indicate a sub-mode with the smallest rate distortion cost in the K sub-modes.

37. The video encoding method according to claim 36, wherein
the index information that indicates the sub-mode with the smallest rate distortion cost in the K sub-modes comprises any one or more of following indexes:

a sub-mode index, wherein each sub-mode index corresponds to one combination of a filtering window of the current block and a reconstruction area neighboring to the current block;
a reconstruction area index of the current block, wherein each reconstruction area index corresponds to one reconstruction area;
a parameter index of the reconstruction area of the current block, wherein the parameter index of the reconstruction area comprises at least one of a dimension index or a type index, and a dimension of the reconstruction area comprises at least one of a quantity of rows of the reconstruction area above the current block or a quantity of columns of the reconstruction area on the left of the current block;

a filtering window index of the current block, wherein each filtering window index corresponds to one filtering window; or

a parameter index of the filtering window of the current block, wherein a parameter of the filtering window comprises at least one of a shape, a dimension, or a quantity of neighboring positions.

**38.** A bitstream, wherein the bitstream is generated by using the video encoding method according to any one of claims 34 to 37.

**39.** An intra prediction apparatus based on interpolation filtering, comprising a processor and a memory that stores a computer program, wherein when executing the computer program, the processor is capable of implementing the intra prediction method based on interpolation filtering according to any one of claims 1 to 18.

**40.** A video decoding apparatus, comprising a processor and a memory that stores a computer program, wherein when executing the computer program, the processor is capable of implementing the video decoding method according to any one of claims 19 to 33.

**41.** A video encoding apparatus, comprising a processor and a memory that stores a computer program, wherein when executing the computer program, the processor is capable of implementing the video encoding method according to any one of claims 34 to 37.

**42.** A video encoding and decoding system, comprising the video encoding apparatus according to claim 41 and the video decoding apparatus according to claim 40.

**43.** A non-transient computer-readable storage medium, wherein the computer-readable storage medium stores a computer program, and when being executed by a processor, the computer program is capable of implementing the intra prediction method based on interpolation filtering according to any one of claims 1 to 18, or the video decoding method according to any one of claims 19 to 33, or the video encoding method according to any one of claims 34 to 37.

**44.** A computer program product, comprising a computer program, wherein when being executed by a processor, the computer program is capable of implementing the intra prediction method based on interpolation filtering according to any one of claims 1 to 18, or the video decoding method according to any one of claims 19 to 33, or the video encoding method according to any one of claims 34 to 37.

Encoding end apparatus

Data source **11**

Video encoding apparatus **13**

Output interface **15**

**1**

Input interface **21**

Video decoding apparatus **23**

Display apparatus **25**

Decoding end apparatus **2**

**3**

FIG. 1A

**Video encoding apparatus 10**

Video data → Partitioning unit 101

+ 102 −

Transform processing unit 104

Quantizati on unit 106

Prediction unit 100

Inter prediction unit 121

Intra prediction unit 126

112 + + +

Inverse transform unit 110

Dequantization unit 108

Filter unit 113

Entropy encoding unit 115

Decoded picture buffer 114

Encoded video bitstream

FIG. 1B

FIG. 1C

0: Planar
1: DC

FIG. 2

Determine, based on a filtering window of a current block and a reconstructed value of a pixel in a reconstruction area neighboring to the current block, a filtering coefficient used to perform interpolation filtering on the current block ⟩ S110

Perform pixel-by-pixel prediction on pixels in the current block according to the filtering window and the filtering coefficient, to obtain a predicted block of the current block ⟩ S120

FIG. 3

| P0 | P1 | P2 | P3 |
|----|----|----|----|
| P4 | P5 | P6 | P7 |
| P8 | P9 | P10 | P11 |
| P12 | P13 | P14 | Current position |

FIG. 4A

| C0 | C1 | C2 | C3 |
|----|----|----|----|
| C4 | C5 | C6 | C7 |
| C8 | C9 | C10 | C11 |
| C12 | C13 | C14 | |

FIG. 4B

Reconstruction area

Current block

FIG. 5A

Reconstruction area

Current block

FIG. 5B

Reconstruction area

Current block

FIG. 5C

FIG. 6A

FIG. 6B

FIG. 6C

FIG. 7A

FIG. 7B

FIG. 7C

FIG. 8A

Upper-left

K

Reconstruction area

Direct Left

N

Current block

M

N

Lower-left

L

FIG. 8B

Reconstruction area

Directly above

Upper-left

Upper-right

K

M

M

Reconstruction area

Direct left

N

Current block

N

Lower-left

L

FIG. 8C

FIG. 9A

FIG. 9B

FIG. 10

Perform intra prediction on a current block based on a plurality of intra prediction modes, where in a case in which it is determined that an interpolation filtering mode is allowed to be used for the current block, intra prediction in the interpolation filtering mode is performed on the current block according to the intra prediction method based on interpolation filtering according to any one of embodiments of the present disclosure — S210

When it is determined, based on rate distortion costs of the plurality of intra prediction modes, to perform intra prediction on the current block by using the interpolation filtering mode, encode an interpolation filtering mode flag of the current block — S220

FIG. 11

Decode an interpolation filtering mode flag of a current block — S310

In a case in which it is determined, based on the interpolation filtering mode flag obtained through the decoding, to perform intra prediction on the current block by using an interpolation filtering mode, determine a filtering window selected for the current block and a reconstruction area selected for the current block — S320

Perform intra prediction on the current block based on the determined filtering window and the determined reconstruction area by using the intra prediction method based on interpolation filtering according to any one of embodiments of the present disclosure — S330

FIG. 12

Reconstruction area

13

13

M

M

N

Current block

FIG. 13A

Recons-truction area

13

M

N

Current block

N

13

FIG. 13B

Reconstruction area

13

M

M

N

Current block

N

13

FIG. 13C

8

Reconstruction area

8

M

M

N

Current block

FIG. 13D

FIG. 13E

FIG. 13F

FIG. 14A

FIG. 14B

71

Processor

Memory

73

FIG. 15

FIG. 16A

FIG. 16B

FIG. 16C

FIG. 16D

FIG. 16E

FIG. 16F

# EP 4 672 752 A1

## INTERNATIONAL SEARCH REPORT

| | International application No. |
|---|---|
| | **PCT/CN2023/078238** |

**A. CLASSIFICATION OF SUBJECT MATTER**

H04N19/593(2014.01)i; H04N19/80(2014.01)i

According to International Patent Classification (IPC) or to both national classification and IPC

**B. FIELDS SEARCHED**

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS, VEN, CNTXT, ENTXTC, ENTXT, IEEE, CNKI, JVET: 插值, 插值滤波, 插值滤波模式, 帧内预测, 窗口, 二维, 块, 滤波, 滤波窗口, 区, 区域, 维纳霍夫方程, 系数, 形状, 预测块, 预测值, 帧内, 重建, "2d", eip_enable_flag, interpolation, filtering, mode, intra prediction, window, two dimensional, block, filtering window, region, Wenhoff equation, coefficient, shape, prediction block, predictor, intra, reconstruction

**C. DOCUMENTS CONSIDERED TO BE RELEVANT**

| Category* | Citation of document, with indication, where appropriate, of the relevant passages | Relevant to claim No. |
|---|---|---|
| X | US 2009232207 A1 (SAMSUNG ELECTRONICS CO., LTD.) 17 September 2009 (2009-09-17) description, paragraphs 0007-0100, and figures 2, 4, and 6-9 | 1-5, 12-16, 19, 34, 38-44 |
| Y | US 2009232207 A1 (SAMSUNG ELECTRONICS CO., LTD.) 17 September 2009 (2009-09-17) description, paragraphs 0007-0100, and figures 2, 4, and 6-9 | 6-11 |
| Y | CN 101453644 A (HUAWEI TECHNOLOGIES CO., LTD.) 10 June 2009 (2009-06-10) description, page 7, line 15 to page 18, line 18 | 6-11 |
| A | CN 110944211 A (TENCENT TECHNOLOGY (SHENZHEN) CO., LTD.) 31 March 2020 (2020-03-31) entire document | 1-44 |
| A | US 2018332292 A1 (MEDIATEK INC.) 15 November 2018 (2018-11-15) entire document | 1-44 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 November 2023** | **14 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
#### Information on patent family members

| International application No. |
|---|
| **PCT/CN2023/078238** |

| Patent document cited in search report | | | Publication date (day/month/year) | Patent family member(s) | | | Publication date (day/month/year) |
|---|---|---|---|---|---|---|---|
| US | 2009232207 | A1 | 17 September 2009 | US | 8249154 | B2 | 21 August 2012 |
| | | | | KR | 20090097688 | A | 16 September 2009 |
| CN | 101453644 | A | 10 June 2009 | None | | | |
| CN | 110944211 | A | 31 March 2020 | KR | 20220038787 | A | 29 March 2022 |
| | | | | JP | 2022546774 | A | 08 November 2022 |
| | | | | EP | 3985983 | A1 | 20 April 2022 |
| | | | | EP | 3985983 | A4 | 22 February 2023 |
| | | | | WO | 2021093538 | A1 | 20 May 2021 |
| | | | | US | 2022030233 | A1 | 27 January 2022 |
| US | 2018332292 | A1 | 15 November 2018 | None | | | |

Form PCT/ISA/210 (patent family annex) (July 2022)